**Europäisches Patentamt**

**European Patent Office**

**Office européen des brevets**

(19)

(11) Veröffentlichungsnummer: **0 047 495 A2**

# EUROPÄISCHE PATENTANMELDUNG

(12)

(21) Anmeldenummer: **81106881.6**

(22) Anmeldetag: **03.09.81**

(51) Int. Cl.³: **G 03 B 21/44**, G 03 B 9/10

(30) Priorität: **05.09.80 DE 3033418**

(43) Veröffentlichungstag der Anmeldung: **17.03.82**
**Patentblatt 82/11**

(84) Benannte Vertragsstaaten: **AT CH FR GB IT LI**

(71) Anmelder: **AGFA-GEVAERT Aktiengesellschaft Camera-Werk, Postfach, D-8000 München 90 (DE)**

(72) Erfinder: **Burgermann, Norbert, Fischbachauer Strasse 2, D-8000 München 90 (DE)**
Erfinder: **Rieder, Alois, Sachrangerstrasse 10, D-8000 München 90 (DE)**
Erfinder: **Rossbach, Horst, Bussardstrasse 8, D-8031 Eichenau (DE)**

(54) **Laufbildgerät.**

(57) Ein Laufbildprojektor, der mit einem durch einen elektrischen Antrieb drehbaren Umlaufverschluss, mit einer durch den elektrischen Antrieb gesteuerten Filmtransport-Greifervorrichtung versehen ist, die in der Abdeckphase des Bildfensters durch einen Verschlusssektor den Film bildweise weitertransportiert, weist einen Elektromagneten auf, durch dessen Anker die Greifervorrichtung mit dem Film kuppelbar bzw. vom Film entkuppelbar ist. Der Umlaufverschluss (2) enthält für einen Impulsgenerator (8, 9, 7, 11, 12) Steuermittel, die so am Umlaufverschluss angeordnet sind, dass dessen Impulse hinsichtlich ihrer Dauer und Phase jeweils mit der Greiferzugphase (18a) in Filmtransportrichtung (A) übereinstimmen und als Positionsimpulse (P) ständig an einer Steuerschaltung (30) für den Elektromagnet (19) anliegen. Die Steuerschaltung (30), die mit Funktionsschaltern (S, L, V, R), wie z.B. einem Vorlauf- und Stopschalter verbunden ist, weist mit Takteingängen (T), Setz- und/oder Rücksetzeingängen (S, R) versehene Speicherkippstufen (SP1 bis SP6) auf. Mindestens einer Speicherkippstufe (SP2, SP3) wird das Steuersignal eines Funktionsschalters (V, S) angeboten. Das Steuersignal wird mittels der Impulsflanke am Ende des Greiferzuges (18a) eines dem Steuersignal folgenden Positionsimpulses über den Setz- oder Takteingang zumindest in die mit dem Elektromagnet (19) zusammenwirkende Ausgangs-Speicherstufe (SP2) zur positionsgerechten Be- oder Entstromung des Elektromagneten (19) am Ende der Greiferzugphase des Greifersystems (15, 16) eingespeichert.

0047495

# AGFA-GEVAERT AG

### LEVERKUSEN

CAMERA-WERK MÜNCHEN
**PATENTABTEILUNG**

CW 2446.4 PP/MP                    05.09.80

10-vf-ni, 100C

## Laufbildgerät

Die Erfindung betrifft ein Laufbildgerät, vorzugsweise einen
Laufbildprojektor mit einem durch einen elektrischen Antrieb
drehbaren Umlaufverschluß, mit einer durch den elektrischen
Antrieb gesteuerten Greifervorrichtung für den Filmtransport, wobei die Greifervorrichtung in der Abdeckphase des
Bildfensters durch einen Verschlußsektor den Film bildweise
weitertransportiert und mit einem Elektromagneten, durch
dessen Anker die Greifervorrichtung mit dem Film kuppelbar
bzw. vom Film entkuppelbar ist.

Der Erfindung liegt nun die Aufgabe zugrunde, eine bildpositionsgerechte Stillsetzung des Films, das Kuppeln der Greifervorrichtung mit dem Film sowie das Entkuppeln der Greifervorrichtung auf rein elektronische Weise zu ermöglichen.
Dies soll mit einfachen Mitteln und in sicherer Weise bevorzugt nach Ablauf der Greiferzugphase in der Greiferpausenphase erfolgen. Hierdurch soll gewährleistet sein, daß der
Film schonend behandelt wird.

Die Aufgabe wird erfindungsgemäß dadurch gelöst, daß der Umlaufverschluß für einen Impulsgenerator Steuermittel aufweist, die so am Umlaufverschluß angeordnet sind, daß dessen Impulse hinsichtlich ihrer Dauer und Phase jeweils mit der Greiferzugphase in Filmtransportrichtung übereinstimmen und als Positionsimpulse ständig an einer Steuerschaltung für den Elektromagneten anliegen, daß die Steuerschaltung, die mit Funktionsschaltern, wie z. B. einem Vorlauf- und Stopschalter, verbunden ist, mit Takteingängen, Setz- und/der Rücksetzeingängen versehene Speicherkippstufen aufweist, von denen mindestens einer Speicherkippstufe das Steuersignal eines Funktionsschalters angeboten wird, daß mittels der Impulsflanke am Ende des Greiferzuges eines dem Steuersignal folgenden Positionsimpulses über den Setz- oder Takteingang zumindest in die mit dem Elektromagneten zusammenwirkende Ausgangs-Speicherkippstufe zur positionsgerechten Be- oder Entstromung des Elektromagneten am Ende der Greiferzugphase des Greifersystems eingespeichert wird. Hierdurch wird in vorteilhafter Weise eine elektronische Stillsetzung des Filmes erreicht, ohne das hierbei komplizierte mechanische Steuermittel und Steuerkurven notwendig sind. Durch die sicherere Entkupplung des Greifersystems vom Film mit Hilfe des Magneten am Ende der Greiferzugphase wird gewährleistet, daß der Entkupplungs- bzw. Kupplungsvorgang mit Sicherheit gewährleistet ist. Die bildpositionsgerechte elektronische Kupplung und Entkupplung des Magnetsystems (synchron mit den Positionsimpulsen) vom Film ist nicht nur anwendbar bei Betrieb der Schaltungsanordnung im Vorlauf- und Stopbetrieb, sondern auch im Rücklaufbetrieb, im Einzelbetrieb, im Timerbetrieb (Standbildprojektion mit vorgegebener Zeitspanne) sowie im Stopbetrieb aufgrund von auf dem Film vorgesehenen Bildmarkierungssinalen. Dadurch ergibt sich ein den Film schonendes Kuppeln und Entkuppeln der Greifervorrichtung.

CW 2446.4 PP/MP

Weitere, in Kombination mit den Merkmalen des Anspruchs 1 sowie auch für sich erfinderische Ausgestaltungen ergeben sich aus den Merkmalen der Unteransprüche in Verbindung mit der Beschreibung des Ausführungsbeispiels, der weitere Vorteile der Merkmale des Anspruchs 1 sowie die besonderen Vorteile der Merkmale der Unteransprüche entnehmbar sind.

So ist gemäß weiterer Ausbildung zur Entlasung der mit der vorgenannten Impulsflanke getakteten Speicherkippstufen sowie zur Erhöhung der Sicherheit mindestens eine der getakteten Speicherkippstufen über ihren Takteingang durch die Beginn der Greiferzugphase auftretende Impulsflanke eines dem Funktionsschaltersignal folgenden Positionssignals im Sinne einer Zwischenspeicherung des betreffenden Funktionssignals kippbar, wobei das betreffende Funktionssignal bei der nächstfolgenden Impulsflanke am Ende der Greiferzugphase des Positionsimpulses in die Ausgangs-Speicherkippstufe eingespeichert wird.

Gemäß weiterer Ausgestaltung ist eine Vorlauftaste mit dem Steuereingang einer Vorlauf-Speicherkippstufe verbunden, deren Takteingang eine Steuerleitung zum Positions-Signaleingang aufweist und nur durch die Impulsflanke am Ende der Greiferzugphase beeinflußbar ist, wobei der Ausgang der Vorlauf-Speicherkippstufe mit dem Setzeingang der Ausgangs-Speicherkippstufe verbunden ist, wobei der Stopschalter mit dem Steuereingang einer Zwischenspeicherkippstufe verbunden ist, deren Takteingang eine Steuerleitung zum Positions-Signaleingang aufweist und nur durch die Impulsflanke am Anfang der Greiferzugphase beeinflußbar ist und wobei der Ausgang des Zwischenspeichers eine Steuerleitung zum Rücksetzeingang der Vorlauf-Speicherkippstufe aufweist.

Außerdem soll die Stoptaste auch für Einzelbildwiedergabebetrieb verwendet werden. In vorteilhafter Weise ist hierzu der Ausgangs-Speicherkippstufe eine im Vorwärtsbetrieb zwangsweise zurückgesetzte Einzelbild-Speicherkippstufe zugeordnet, deren Ausgang mit dem Steuereingang und deren Rücksetzeingang mit dem Ausgang der Ausgangs-Speicherkippstufe verbunden ist, wobei der Takteingang der Einzelbildspeicherkippstufe eine Steuerleitung mit dem Ausgang der Zwischen-Speicherkippstufe aufweist, wobei bei Betätigung des Stopschalters die zwangsweise Rücksetzung der Vorlauf-Speicherkippstufe und die zwangsweise Setzung der Ausgangs-Speicherkippstufe aufgehoben werden, wobei bei erneuter Betätigung des nun als Einzelbildschalter wirkenden Stopschalters nach Ablauf mindestens eines Positionsimpulses mit der Anstiegsflanke am Anfang des Greiferzugs des Positionsimpulses die Einzelbild-Speicherkippstufe gesetzt wird und die Ausgangs-Speicherkippstufe für eine Positionsimpulsperiode, beginnend mit der Abstiegsflanke des Positionsimpulses, gesetzt bleibt.

In vorteilhafter Weise weist die Einzelbild-Speicherkippstufe einen unbeschalteten bzw. mit festem Steuerpotential versehenen Steuereingang auf.

In besonders vorteilhafter Weise ist die Steuerschaltung dafür geeignet, auf Markierungen auf dem Film anzusprechen und diese Markierungen über eine Erkennungsschaltung entsprechend auszuwerten. Hierzu ist für die Bildmarkierungsimpulse eine Steuerleitung mit dem Steuereingang einer Bildmarkierungs-Speicherkippstufe verbunden, deren Ausgang mit dem Rücksetzeingang der Vorlauf-Speicherkippstufe und dessen Rücksetzeingang mit dem invertierenden Ausgang der Vorlauf-Speicherkippstufe verbunden ist, wobei der Takteingang der Bildmarkierungs-Speicherkippstufe durch die Impulsflanke
am Anfang der Greiferzugphase des Positionsimpulses gesteuert wird.

In vorteilhafter Weise sind die Speicherkippstufen flankengesteuerte D-Flip-Flops. Auch ist die Zwischen-Speicherkippstufe mit ihrem Rücksetz- und Setzeingang mit Erdpotential
verbunden.

Um zu erreichen, daß die Speicherkippstufen erst gelöscht
werden, wenn die Folge-Speicherkippstufen ihr Signal übernommen haben, weisen die durch Speicherkippstufen beeinflußbaren Folge-Speicherkippstufen Steuerleitungen vom Ausgang
der Folge-Speicherkippstufen zum Rücksetzeingang bzw. Löscheingang der vorgeschalteten Speicherkippstufen auf.

Um die asynchron zu den Bildimpulsen erfolgenden Betätigungen der Steuerschalter zu speichern, ist zwischen Stopeingang und Zwischenspeicher, zwischen Vorlaufeingang und Vorlauf-Speicherkippstufe und zwischen Bildmarkierungs-Speicherkippstufe und Bildmarkierungssignaleingang je ein Vorspeicher vorgesehen.

Um die Vorspeicher nach Weiterleitung der Steuersignale zu
löschen, weist der Ausgang der Zwischenspeicherkippstufe
bzw. der Vorlauf-Speicherkippstufe bzw. der Bildmarkierungs-Speicherkippstufe je eine Löschsteuerleitung zu dem
jeweils vorgeschalteten Vorspeicher auf.

Um die Steuerschaltung auch für den Rücklaufbetrieb auszunutzen, ist ein Rücklaufschalter vorgesehen, dem ein Rücklaufspeicher nachgeschaltet ist, durch den sämtliche Speicherkippstufen zwangsweise zurücksetzbar sind, wobei die
Greifervorrichtung im Rücklaufbetrieb durch den Elektromagneten entkuppelt ist.

Um auch nach dem Stop aus dem Rücklauf eine positionsgerechte Stillsetzung des Films zu erreichen, ist dem bei Betätigung der Stoptaste löschbaren Rücklaufspeicher ein Rücklaufstopspeicher nachgeschaltet, wobei nach dem Löschen des
Rücklaufspeichers sämtliche zwangsweisen Rücksetzungen der
Speicherkippstufen aufgehoben sind, wobei der Rücklaufstopspeicher in Verbindung mit dem Steuerimpuls bei Betätigung
der Stoptaste eine Verzögerungs- oder Zählkette einschaltet,
wobei nach Verstreichen der Verzögerungszeitspanne, die an
die Stillsetzzeit des Rücklaufmotors angepaßt ist, durch
einen Ausgangsimpuls der Zählkette, die bei allen anderen
Betriebs- bzw. Funktionsarten der Schaltungsanordnung
zwangsweise zurückgesetzt ist, über eine entsprechende Steuerleitung der Steuereingang der Zwischen-Speicherkippstufe
einen Steuerimpuls erhält, wodurch eine Steuerfolge für Einzelbild gestartet wird.

Um die Steuerschaltung auch für den Timerbetrieb auszunutzen, ist gemäß einer Ausgestaltung der Erfindung eine Zeitverzögerungsschaltung vorgesehen, welche eine Steuerleitung
zum Steuereingang der Vorlauf-Speicherkippstufe oder zum
Takteingang des Vorspeichers derselben aufweist, wobei vom
Ausgang der Ausgangs-Speicherkippstufe eine Startsteuerverbindung zur Zeitverzögerungsschaltung vorgesehen ist, wodurch z. B. nach der bildpositionsgerechten Entkupplung des
Greifersystems infolge eines Lichtmarkenimpulses oder infolge der Betätigung des Stopschalters nach Verstreichen der
Verzögerungszeitspanne die Schaltungsanordnung erneut auf
Vorlaufbetrieb eingeschaltet wird. Hierbei ist in der Startsteuerverbindung eine Verknüpfungsschaltung vorgesehen, die die Startsteuerverbindung erst nach Freigabe des Stopschalters durchschaltet.

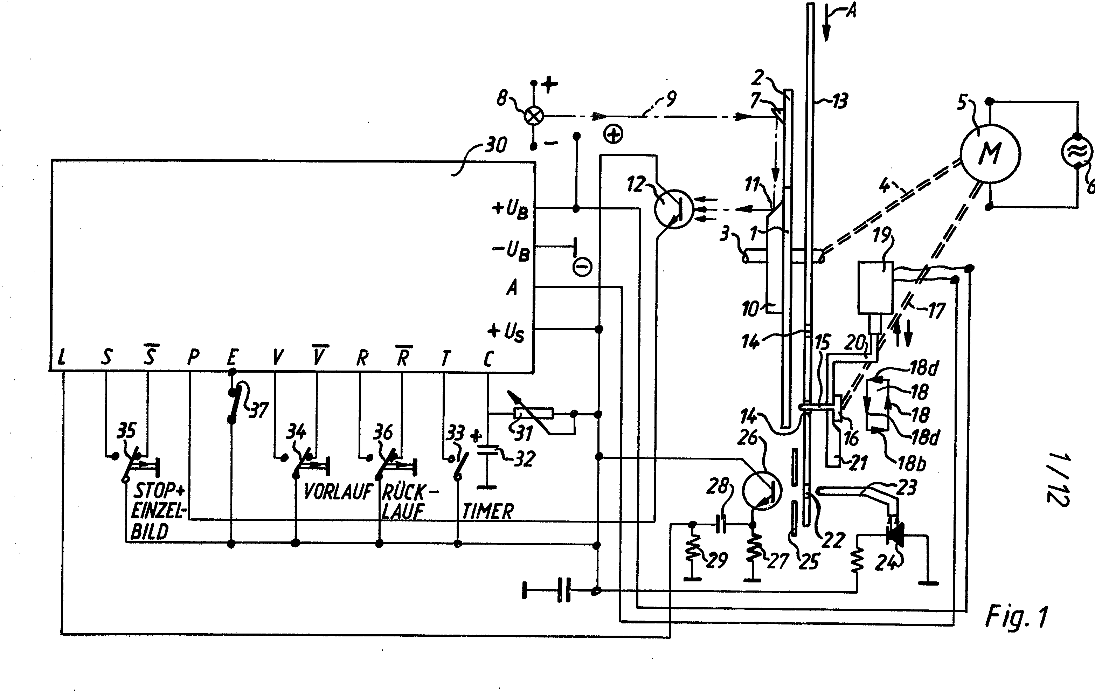

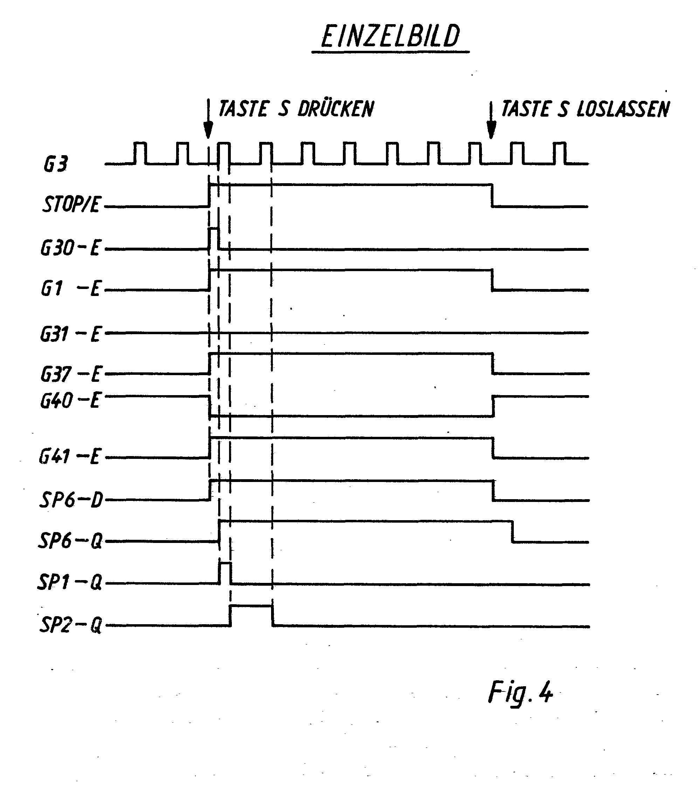

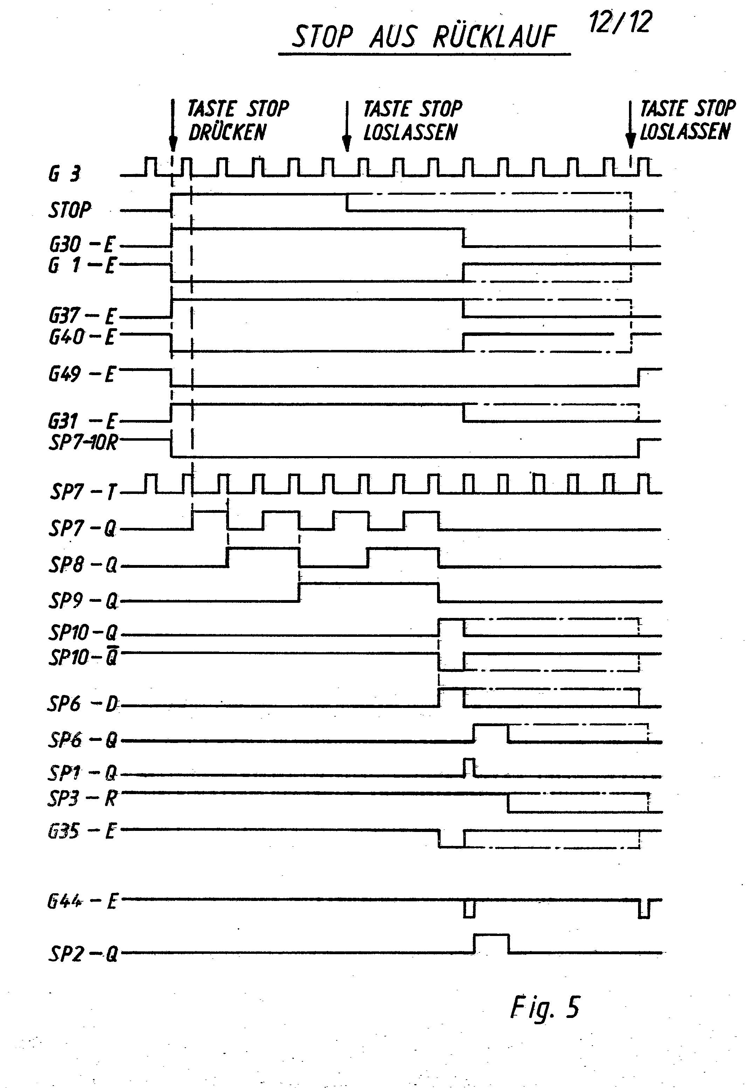

Im folgenden wird die Erfindung eines in den Figuren 1 bis 5 dargestellen Ausführungsbeispieles beschrieben. Es zeigen:

Figur 1     in schematischer Darstellung einen integrierten Schaltkreis zur Steuerung der Bewegungsabläufe im Projektionsgerät sowie die an diesen anzuschliessenden peripheren Bauteile,

Figuren     die Schaltungsanordnung des integrierten Steuer-
2a bis 2h   schaltkreises in $I^2L$-Technik und

Figuren     Impulsdiagramme für die Betriebsarten "aus Vor-
3 bis 5     lauf", "Einzelbild" und "aus Rücklauf", wobei der Buchstabe "E" jeweils den Eingang der betreffenden Gatter kennzeichnet.

Gemäß Figur 1 ist mit 1 ein Umlaufverschluß bezeichnet, der drei um 120° versetzte Verschlußlamellen 2 aufweist. Der Umlaufverschluß ist um eine Achse 3 drehbar und über getriebliche Mittel 4 mit einem Antriebsmotor 5 verbunden, welcher durch eine Wechselspannungsquelle 6 betrieben wird. An einem Umlaufverschlußsektor 2 ist ein Umlenkspiegel vorgesehen, der das von einer Lichtquelle 8 ausgestrahlte Lichtbündel 9 in Richtung auf die Achse 3 umlenkt. An einem umlaufverschlußseitigen Bund 10 ist ein weiterer Umlenkspiegel 11 vorgesehen, welcher das Lichtstrahlenbündel 9 auf einen Fototransistor 12 wirft.

Ein Film ist mit 13 bezeichnet, der Perforationslöcher 14 aufweist. In die Perforationslöcher 14 greift ein Greiferstift 15 eines Greiferhebels 16 ein, welcher über eine Steuerkurven aufweisende getriebliche Nockenverbindung 17 mit dem Antriebsmotor 5 verbunden ist.

Hierbei führt der Greiferhebel 16 mit dem Greiferstift 15 eine Greiferbewegung 18 aus. In der Phase 18a ist der Greiferstift 15 in die Perforation 14 eingetaucht und bewegt den Film um eine Bildlänge in Pfeilrichtung A. In der Bewegungsphase 18b hebt der Greiferstift 15 aus der Perforation 14 aus. In der Phase 18c erfolgt die Rückbewegung des Greiferhebels, der in der Phase 18d wieder in die Perforation 14 eintaucht.

Mit 19 ist ein Elektromagnet bezeichnet, dessen Anker 20 mit einem Ansatz 21 versehen ist. Im abgefallenen Zustand hat der Ansatz 21 die in Figur 1 gezeigte Lage. Im angezogenen Zustand des Ankers 20 wird der Ansatz 21 entgegen der Pfeilrichtung A parallel zur Filmebene 13 bewegt. Hierbei bleibt der Antrieb 5 über die Steuerverbindung 17 mit dem Greiferhebel 16 in Wirkverbindung. Der Stift 15 des Greiferhebels 16 kann jedoch nicht in die nächstfolgende Perforation 14 eingreifen, da der Ansatz 21 ein Eintauchen des Stiftes 15 verhindert.

In Höhe der Perforationslöcher 14 weist der Film auf der gegenüberliegenden Seite an bestimmten Stellen Markierungen 22 auf, die eine automatische Stillsetzung des Films bewirken sollen. In einem definierten Abstand vom nicht dargestellten Filmfenster befindet sich ein Lichtleitstab 23, dessen eines freies Ende vor einer Bildmarkierung 22 sich befindet. Das andere freie Ende des Lichtleitstabes 23 befindet sich vor einer Leuchtdiode 24. Auf der anderen Seite des Filmes 13 ist eine Blende 25 vorgesehen, hinter der ein Fototransistor 26 angeordnet ist. Ein Emitterwiderstand des Fototransistors 26 ist mit 27 bezeichnet. Vom Emitter führt eine Verbindung zu einem Kondensator 28 und einem Widerstand 29. Beide Elemente bilden ein Differenzierglied.

Die Lage der Spiegel 7 und 11 und deren Breite sind so auf die Ausbildund der Nocken-Steuerkurven der getrieblichen Verbindung 17 zwischen Motor 5 und Greifersystem 15, 16 abgestimmt, daß eine Lichtimpulsübertragung auf den Fototransistor 12 nur während der Zugphase 18a des Greifersystemes 15, 16 erfolgt. Hierdurch ergibt sich der Vorteil, daß die Anstiegs- bzw. Abstiegsflanke des Lichtimpulses bzw. die Impulsphasendauer eine genaue Aussage über die jeweilige Stellung des Greifersystemes 15, 16 gibt und daher zur Auswertung für eine positionsgerechte Stillsetzung des Filmes herangezogen werden kann.

Mit 30 ist ein integrierter Steuerschaltkreis bezeichnet, dessen Eingang $+U_B$ mit dem Pluspol einer Versorgungsspannungsquelle verbunden ist. Eine weitere Anschlußstelle $-U_B$ ist mit Minuspotential der Spannungsquelle verbunden. Der Ausgang A des Steuerschaltkreises 30 ist mit dem Elektromagneten 19 verbunden, dessen verbleibender Anschluß mit dem Pulspol der Batterie verbunden ist. Mit $U_S$ ist ein Anschluß des Steuerschaltkreises 30 bezeichnet, an dem eine geregelte konstante Spannung anliegt. Diese konstante Spannung wird im Steuerschaltkreis 30 erzeugt. Von der Anschlußstelle $U_S$ führt eine erste Verbindung zum Kollektor des Fototransistors 12, dessen Emitter mit dem Eingang P des Steuerschaltkreises 30 verbunden ist. Über den Eingang P gelangen die Lichtimpulse des Fototransistors 12 in die Steuerschaltung 30. Außerdem führt vom Ausgang $U_S$ eine Verbindung zum Fototransistor 26. Vom Abgriff zwischen dem Kondensator 28 und dem Widerstand 29 führt eine Steuerverbindung zum Eingang L der Steuerschaltung 30. Diese Steuerverbindung wird auch als Lichtmarkenverbindung bezeichnet.

Ein Eingang C der Steuerschaltung 30 ist mit einem Widerstand 31 und mit einem Kondensator 32 verbunden. Beide Elemente bilden ein Zeitglied für die Timer-Funktion des Projektionsgerätes. Der Timer bewirkt, daß der Film nach dem Anhalten eine vorgegebene Zeit stehen bleibt, um dann anschließende wieder weitertransportiert zu werden. Der Timer wird mittels eines Schalters 33 eingeschaltet, der das Potential des Ausganges $U_S$ zum Eingang T der Steuerschaltung führt.

Mit 34 ist eine Vorlauftaste bezeichnet, welche als Umschalter ausgebildet ist und mit zwei Eingängen V und $\overline{V}$ der Steuerschaltung 30 zusammenwirkt.

Mit 35 ist eine Stop- und Einzelbildtaste bezeichnet, welche mit den Eingängen S und $\overline{S}$ der Steuerschaltung 30 zusammenwirkt. Mit 36 ist eine Rücklauftaste bezeichnet, welche mit den beiden Eingängen R und $\overline{R}$ der Steuerschaltung 30 zusammenwirkt.

Die Steuerschaltung 30 ist in $I^2L$-Technik aufgebaut. Hierbei handelt es sich um eine integrierte Injektionslogik in digitaler Schaltungstechnik. Diese Injektionstechnik zeichnet sich durch geringe Kristallfläche und geringe Verlustleistung aus. Außerdem sind nur kleine Signalverzögerungszeiten vorhanden.

Die Steuerschaltung 30 weist Speicherkippstufen (D-Flip-Flops) SP1 bis SP10, NAND-Gatter G1 bis G53, Transistoren T1 bis T36 und Widerstände R1 bis R40 auf. Die in den

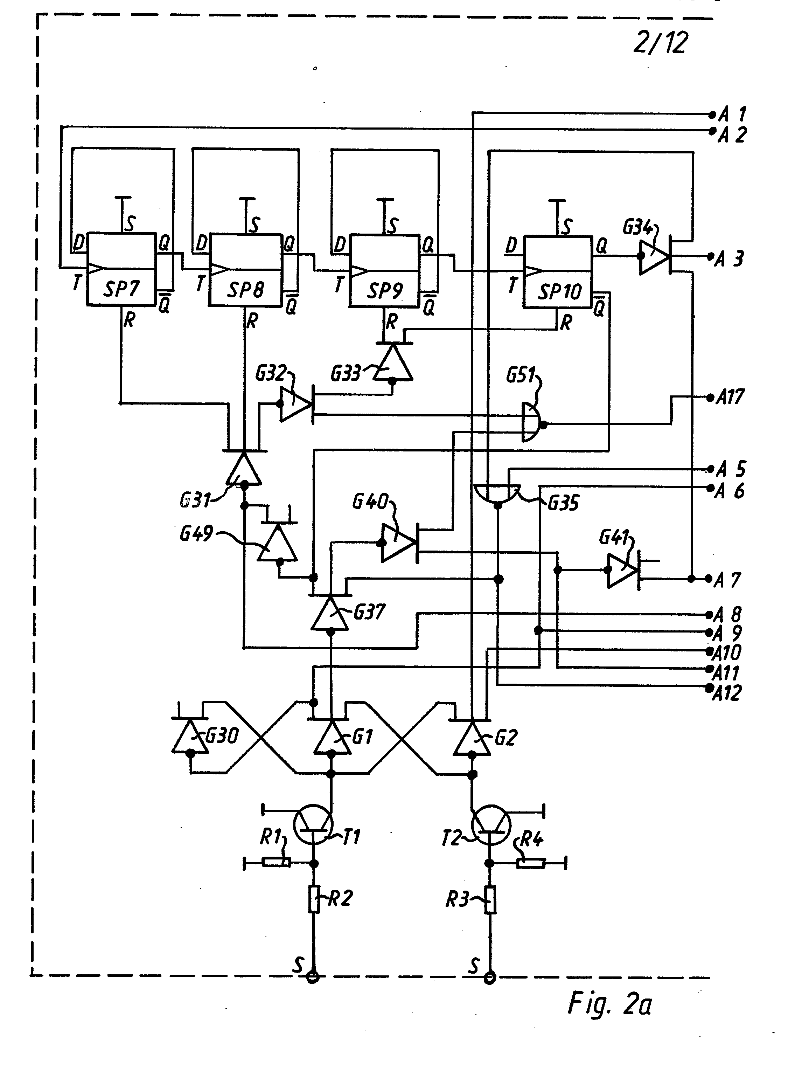

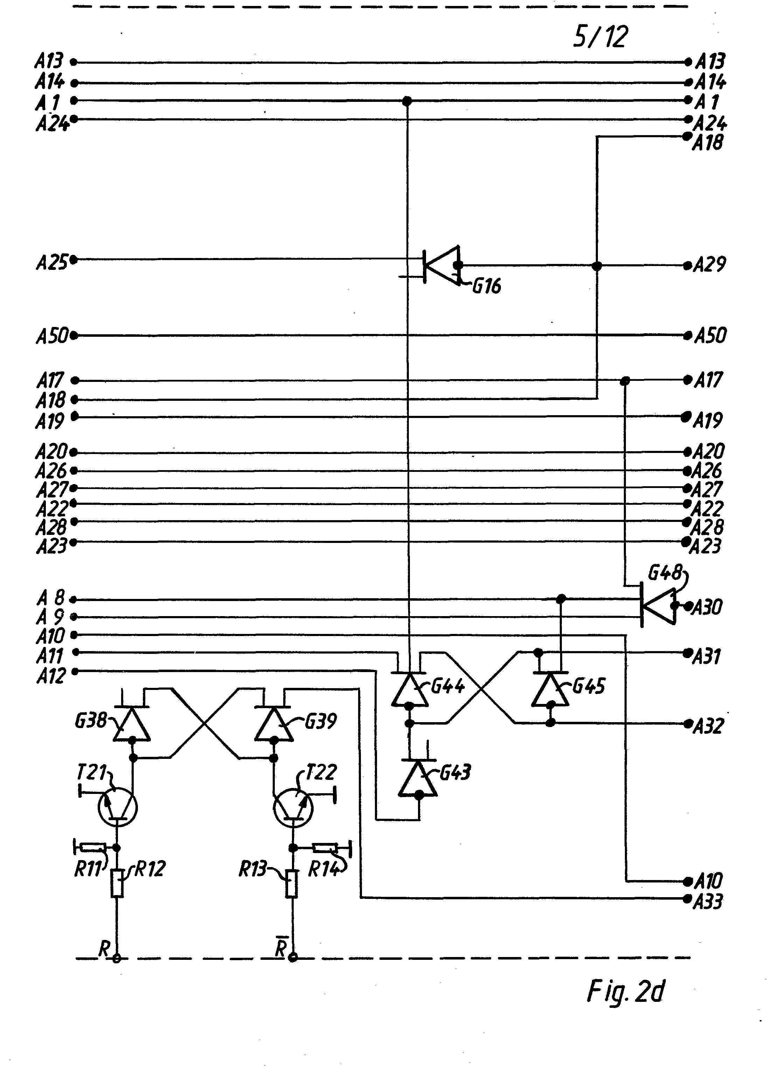

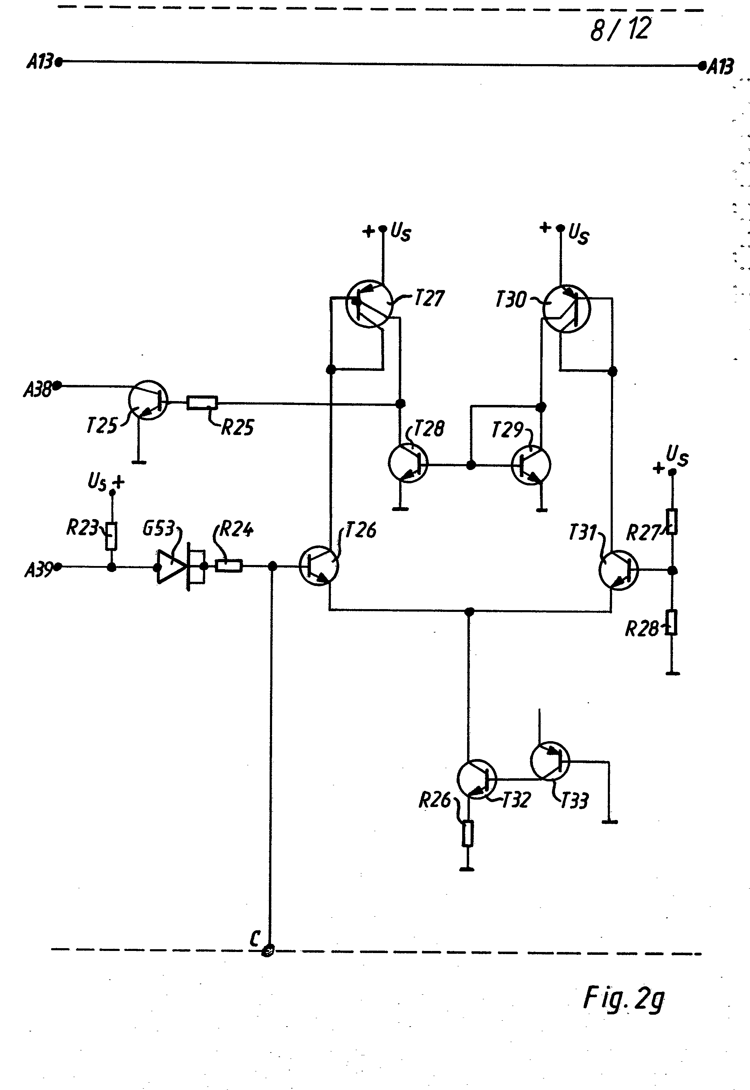

Figuren 2a bis 2h gezeigten NAND-Gatter G1 bis G 53 werden in dieser Darstellungsweise der $I^2$L-Technik am ehesten gerecht. Es ist jeweils ein einziger Eingang vorhanden. Die Invertierung ist eingangsseitig dargestellt. Sie kann aber auch ausgansseitig symbolisiert sein. Die zahlreichen Ausgänge sind untereinander entkoppelt. Sie können durch äußere Aufprägung auch unterschiedliche Potentiale aufweisen. Ein das Potential logisch "1" aufweisender Ausgang kann z. B. mit einem das Potential logisch "0" aufweisenden Ausgang eines anderen Gatters verbunden sein, ohne daß hierdurch ein Kurzschluß erfolgt. Hierbei würde dann der an sich das Potential logisch "1" aufweisende Ausgang des einen Gatters das Potential logisch "0" des Ausgangs des anderen Gatters annehmen.

Mit G35 und G51 sind zwei NOR-Gatter bezeichnet, die in herkömmlicher Darstellung gezeigt sind.

Mit A1 bis A39 sind Anschlußstellen für die Anschlußleitungen der Steuerschaltung 30 gemäß den Figuren 2a bis 2h bezeichnet.

Im folgenden wird zunächst die Steuerschaltung 30 mit ihren Einzelelementen im Zusammenwirken mit den peripher angeschlossenen Teilen in der Einschaltphase der Spannung bis zum Erreichen der vollen Betriebsbereitschaft beschrieben.

Beim Anlegen einer Spannung zwischen den Anschlußstellen $+U_B$ und $-U_B$ erfolgt zunächst eine Aktivierung der Transistoren T12 bis T15, die im Zusammenwirken mit den Widerständen R36, R39 und R40 die stabilisierte Spannung $U_S$ erzeugen. Diese Spannung steht für die gesamte Schaltungslogik des Steuerschaltkreises 30 zur Verfügung.

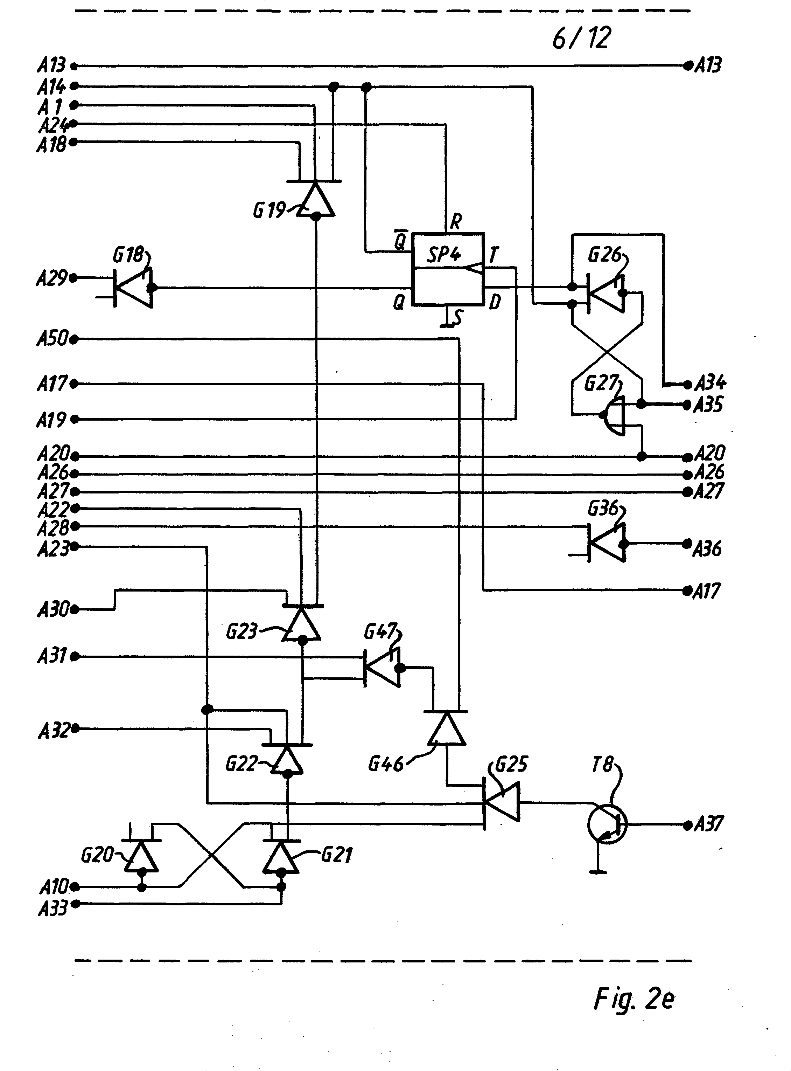

In der ersten Phase des Spannungsanstieges der stabilisierten Spannung $U_R$ ist der Transistor T8 (Figur 2e) gesperrt, da die Spannung an seiner Basis, welche durch die Widerstandsteiler R15, R16 abzüglich der Flußspannung an dem als Diode geschalteten Transistor T9 bestimmt ist, zur Durchsteuerung nicht ausreicht. Der Injektor des Gatters G25 ist zunächst logisch "1", so daß dessen drei Ausgänge Nullpotential aufweisen.

Einer dieser Ausgänge ist mit einem der Ausgänge des Gatters G21 sowie mit einem der drei Ausgänge des Gatters G2 (Figur 2a) verbunden. Eine weitere Verbindung führt vom Ausgang des Gatters G25 zum Eingang des Gatters G20, dessen Ausgang logisch "1" wird. Bei nicht geschlossenem Rücklaufschalter 36 (offene Verbindung zum Eingang R) liegt an der Basis des Transistors T21 Nullpotential an, während an der Basis des Transistors T22 das Potential "1" anliegt. Ein aus Gattern G38 und G39 aufgebauter Speicher ist so gekippt, daß am Ausgang des Gatters G39 logisch "1" liegt. Hierdurch wird es möglich, daß das vom Gatter G20 kommende Signal "1" am Eingang des Gatters G21 wirksam werden kann. Die Ausgänge des Gatters G21 werden logisch "0". Hieraus ist ersichtlich, daß der aus den Gattern G20 und G21 bestehende Speicher in eine Vorzugslage gebracht ist, welche auch dann erhalten bleibt, wenn die Ausgänge des Gatters G25 logisch "1" werden. Einer der Ausgänge des Gatters G21 weist eine Verbindung zum Eingang des Gatters G22 auf. Einer der Ausgänge dieses Gatters weist eine Verbindung zum Speicher G44, G45 auf. An das Gatter G45 wird das Potential logisch "1" gelegt. Dies hat jedoch keine Wirkung. Das Signal logisch "0" gelangt vom Gatter G25 über die Gatter G46 und G47 an das Gatter G44 des Speichers G44, G45. Dieses Nullsignal setzt diesen Speicher in seine Vorzugslage. Die Gatter G46 und G47 sind zur Erweiterung der Anzahl der Ausgangkollektoren des Gatters G25 vorgesehen.

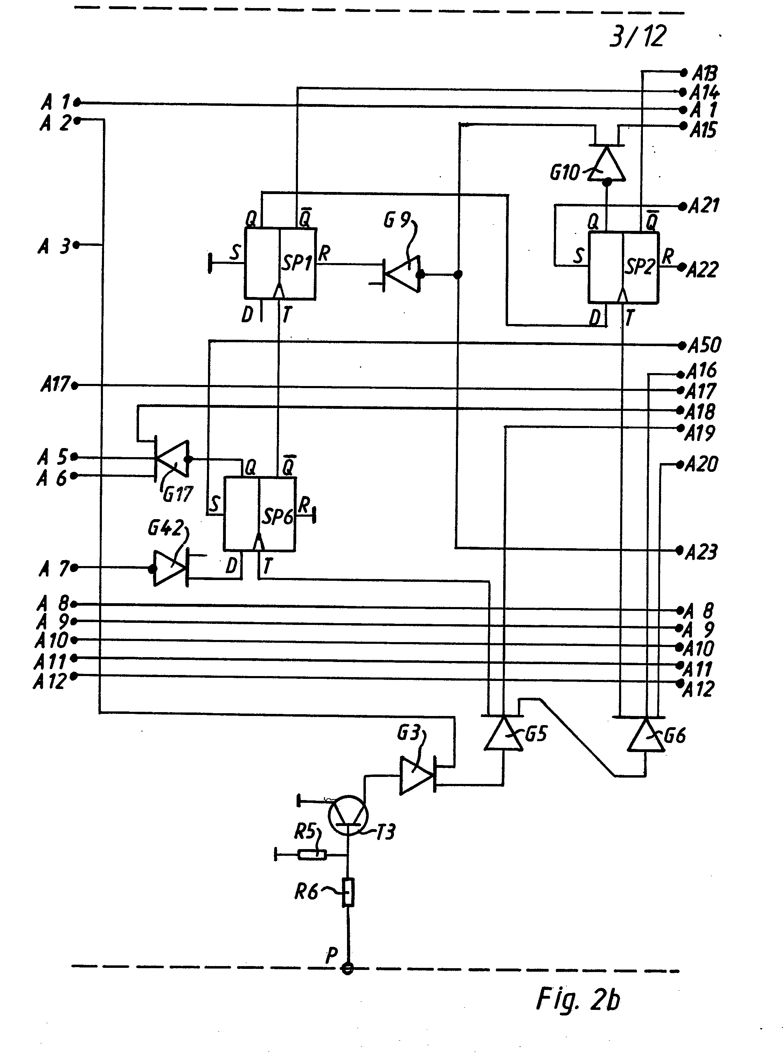

Die beiden weiteren Ausgänge des Gatters G22 sind bestrebt, das Potential logisch "1" anzunehmen. Beide Ausgänge werden vom Gatter G47 zunächst jedoch noch auf logisch "0" gehalten. Die Ausgänge des Gatters G23 weisen das Potential logisch "1" auf. Das gleiche Potential liegt am Ausgang des Gatters G9 (Figur 2b), welcher mit dem Rücksetzeingang R eines Speichers SP1 verbunden ist. Über das Gatter G25 wird dieser Speicher SP1 zurückgesetzt.

Außerdem gelangt das Potential logisch "1" vom Ausgang des Gatters G23 direkt an den Rücksetzeingang R eines Speichers SP2. Außerdem gelangt das Potential logisch "1" über die Gatter G31, G32 und G33 an die Rücksetzeingänge R weiterer Speicher SP7, SP8, SP9 und SP10. Diese Speicher bilden eine Verzögerungskette. Das Potential logisch "1" gelangt außerdem über Gatter G19, G16 an den Rücksetzeingang eines weiteren Speichers SP3 sowie über die Gatter G19 und G14 an den Rücksetzeingang eines weiteren Speichers SP5.

Alle vorgenannten Speicher werden in ihre Ruhelage gebracht. Ein weiterer Speicher SP4 wird über die Steuerverbindung mit dem Ausgang $\overline{Q}$ des Speichers SP3 zurückgesetzt, welcher das Potential logisch "1" aufweist.

Das Potential logisch "1" des Gatters G23 wird durch das Gatter G19 invertiert (logisch "0"). Hierdurch wird der aus den Gattern G26 und G27 bestehende Speicher in seine Vorzugslage gesetzt.

Erreicht die Spannung $U_R$ ungefähr 85% ihres Nennwertes, so wird der Transistor T8 leitend. Demzufolge werden die Ausgänge des Gatters 25 logisch "1", was zur Folge hat, daß sämtliche zwangsweisen direkten Rücksetzungen aufgehoben werden. Eine indirekte Rücksetzung des Speichers SP4 bleibt so lange bestehen, bis der Speicher SP3 gesetzt wird und ein
Rücksetzimpuls vom Ausgang $\overline{Q}$ zum Rücksetzeingang des
Speichers SP4 gelangt. Die Schaltung ist nun arbeitsbereit.

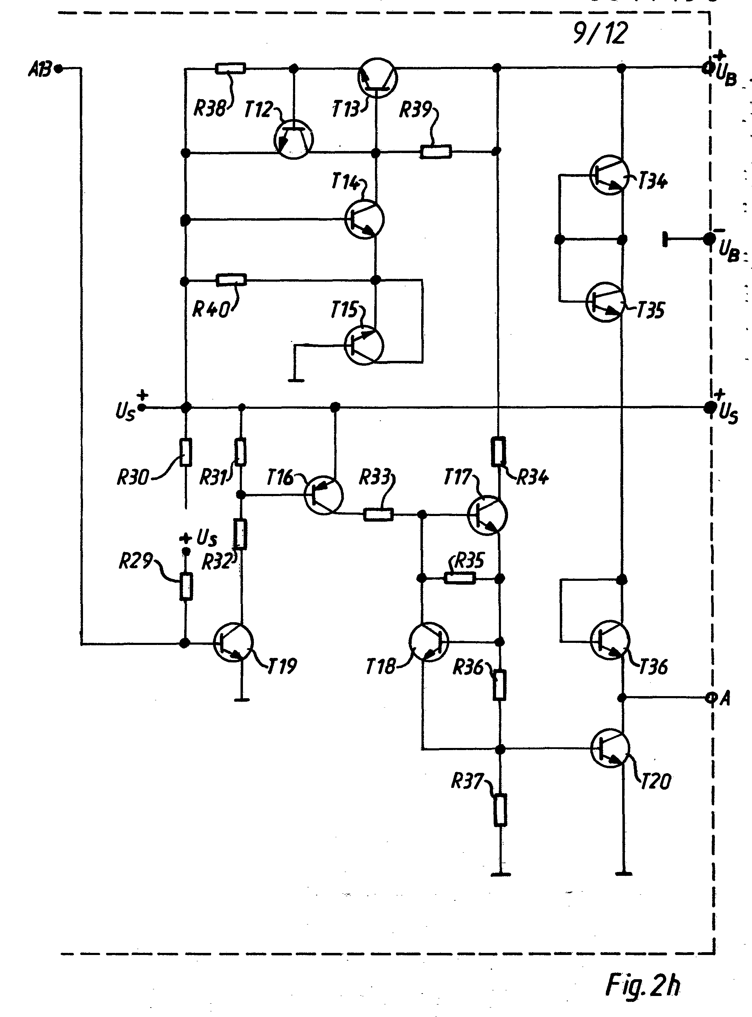

Am Ausgang $\overline{Q}$ des Speichers SP2 liegt logisch "1". Dieses
Potential gelangt über den Transistor T19 (Figur 2h) zu den
Basen der Transistoren T16, T17, T18 und T20. Der Transistor T20 wird leitend mit der Folgewirkung, daß Nullpotential an den Ausgang A gelegt wird.

Der mit diesem Ausgang A verbundene Magnet 19 wird bestromt
mit der Folgewirkung, daß dessen Anker 20 angezogen wird, so
daß der Greiferstift 15 nicht in die Perforationslöcher 14
eingreifen kann.

Der mechanische Umlaufverschluß dreht sich weiter durch den
Motor 5, während der Film 23 steht. Durch die optische Positionsabtasteinrichtung 8, 9, 7, 11, 12 werden auch im Stillstand des Filmes 13 Lichtimpulse erzeugt, die als Impulskette am Eingang P der Schaltungsanordnung 30 anliegen. Während
der positiven Impulsphase wird der Film transportiert (Zugphase 18a), während in der negativen Impulsphase der Film
steht (Standphase 18b bis 18d).

Im folgenden wird nun der Vorlauf ohne Lichtmarkenerkennung
anhand der Figuren 2a bis 2h beschrieben.

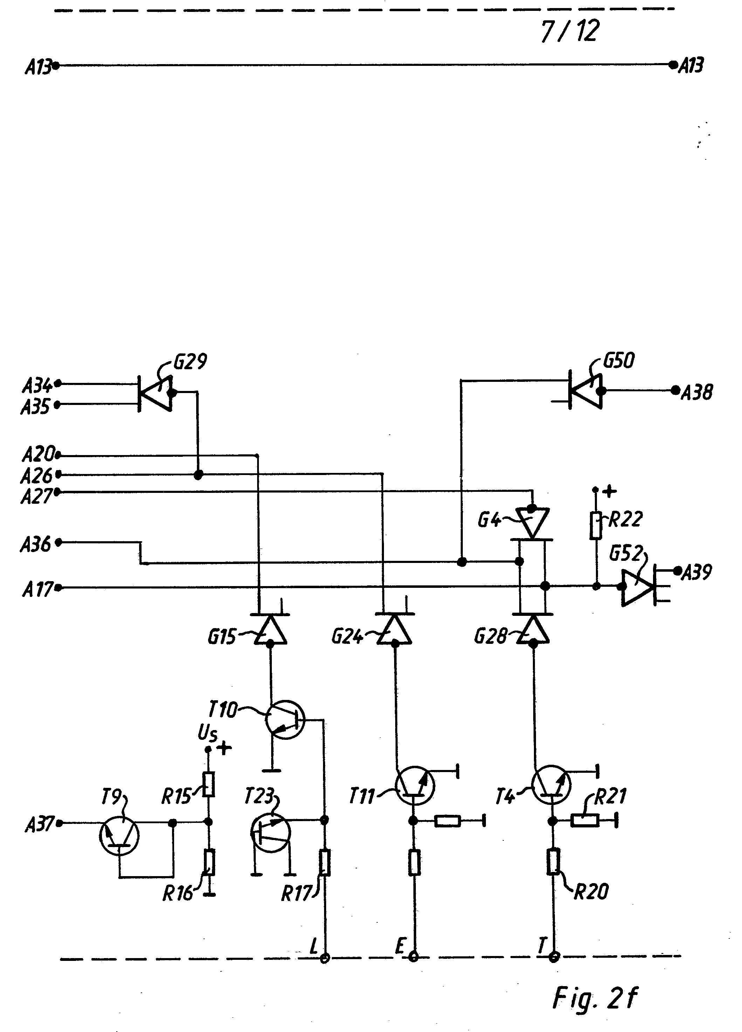

Es wird angenommen, daß die Lichtmarkenerkennung abgeschaltet ist. Dies bedeutet, daß am Eingang E (Figur 2f) ein positives Signal ansteht. Dieses gelangt über den Transistor T11 und das Gatter G24 an das Gatter G29. Es kann nur
dann wirksam werden, wenn auch das Potential logisch "1" vom
Gatter G12 anliegt.

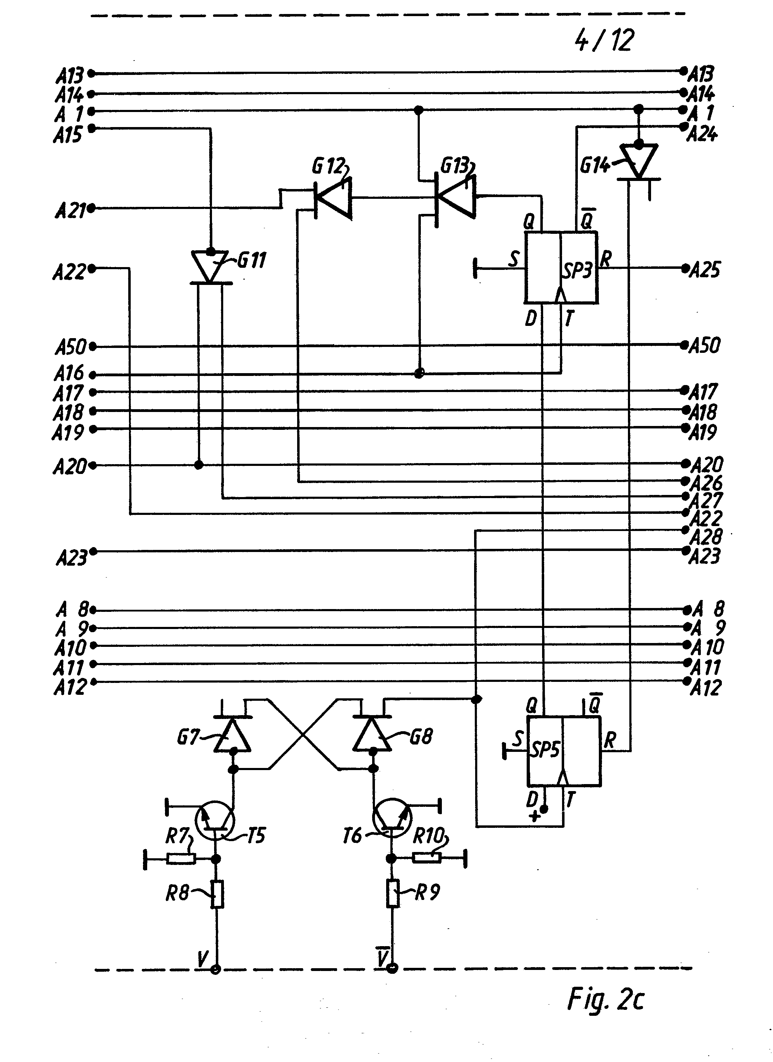

Es wird nun die Vorlauftaste 34 betätigt und Steuerpotential an den Eingang V der Schaltungsanordnung 30 gelegt. Über eine aus Gattern G7 und G8 (Figur 2c) aufgebaute Kippstufe wird die Vorlauftaste 34 entprellt. Der Ausgang des Gatters G8 kippt potentialmäßig von logisch "1" auf logisch "0". Dieser Potentialsprung wird an den Takteingang T des Speichers SP5 weitergeleitet, mit der Folgewirkung, daß die am Eingang D dieses Speichers anliegende Information in den Speicher übernommen wird. Der nicht beschaltete Eingang D bedeutet potentialmäßig logisch "1". Der Ausgang Q dieses Speichers SP5 weist das Potential logisch "1" auf, welches auch am Eingang D des Speichers SP3 vorhanden ist.

Zur Synchronisierung des asynchron erfolgenden Tastendruckes "Vorlauf", welcher im Speicher SP5 festgehalten wird, ist es notwendig, den Potentialübergang von logisch "1" auf logisch "0" am Takteingang T des Speichers SP3 abzuwarten. Erst wenn die Ausgänge des Gatters G6 eine Potentialänderung von logisch "1" auf logisch "0" erfahren, wird entsprechend dem mechanischen Übergang von Zug- auf Standphase das am Eingang D liegende Potential logisch "1" des Speichers SP3 in den Speicher übernommen.

Die Zwischenspeicherung des Vorlaufsignals im Speicher SP5 erfolgt deshalb, weil gewährleistet sein soll, daß nur ein Übergang der Taste 34 aus ihrer Ruhestellung in ihre Arbeitsstellung zur Informationssteuerung ausreichen soll. In den meisten Fällen erfolgt die Betätigung der Vorlauftaste 34 asynchron zur augenblicklichen Lage der Lichtpositionsimpulse und damit asynchron zur Stellung des Greifersystems 15, 16. Mit Hilfe des Speichers SP5 erfolgt eine Synchronisierung derart, daß nach einer Zugbewegung des Greifers 15, 16 positionsgerecht der Magnet 19 entstromt wird. In der bestromten Phase ist der Greifer mit dem Film außer Eingriff.

Das im Speicher SP3 übernommene Potential logisch "1" gelangt vom Ausgang Q dieses Speichers über die Gatter G13 und
G12 an den Setzeingang S des Speichers SP2, der hierdurch
gesetzt wird. Das Potential am Ausgang $\overline{Q}$ des Speichers SP2 wird logisch "0". Hierdurch werden die Transistoren T16 bis T20 derart angesteuert, daß der Magnet entstromt
wird.

Hierbei nimmt der Anker 20 die in Figur 1 gezeigte Stellung
ein. Der Greiferstift 15 führt nun die Bewegungsphase 18b,
18c, 18d aus und greift in der anschließenden Zugphase 18a
in eine Perforation des Filmes ein und transportiert diesen
um eine Bildlänge weiter.

Die Gatter G12 und G13 dienen zur Erweiterung der Anzahl der
Ausgänge des Speichers SP3. Das Potential logisch "0" eines
Ausganges des Gatters G13 gelangt an den Takteingang T des
Speichers SP3. Hierdurch wird bewirkt, daß kein Taktimpuls
mehr wirksam werden kann, solange im Speicher SP3 eine Information vorhanden ist. Das Potential logisch "1" gelangt
vom Ausgang Q des Speichers SP3 über die Gatter G13 und G14
an den Rücksetzeingang R des Speichers SP5, der hierdurch
zurückgesetzt wird. Hierdurch wird verhindert, daß während
des Vorlaufes weitere Betätigungen der Vorlauftaste 34 im
Speicher SP5 Folgewirkungen auslösen. Die im Speicher SP5
vorgespeicherte Information wird wieder gelöscht, sobald
diese Information in den Speicher SP3 gelangt. Hierdurch
wird außerdem bewirkt, daß am Eingang D des Speichers SP3
das Potential logisch "0" liegt.

Wird aufgrund eines Stopbefehles der Speicher SP3 zurückgesetzt, so ist gewährleistet, daß beim nächsten Übergang des
Positionsschalters mit Sicherheit keine Information am Eingang D des Speichers SP3 anliegt, da erst nach der Zurücksetzung dieses Speichers SP3 der Speicher SP5 wieder für
eine erneute Aufnahme eines neuen Vorlaufbefehles bereit ist.

Ein Ausgang des Gatters G12 ist mit dem Ausgang des Gatters G24 und dem Eingang des Gatters G29 verbunden.

Da keine Lichtmarken vom Eingang L erkannt werden sollen,
wird der Ausgang des Gatters G29 potentialmäßig "0" mit der
Folgewirkung, daß in dem aus den Gattern G26 und G27 aufgebauten Speicher keine Lichtmarkeninformation festgehalten
wird.

Das Potential logisch "1" des Ausganges Q des Speichers SP2
wird über die Gatter G10 und G11 zum Eingang des Gatters G27
weitergeleitet, wo es dann wirksam werden kann, wenn der
Ausgang des Gatters G6 potentialmäßig logisch "1" ist (Zugphase des Films) und wenn der Ausgang des Gatters G15 das
Potential logisch "1" aufweist (vorhandene Lichtmarke). Die
Verbindung vom Gatter G29 mit dem Gatter G26 und mit dem
Eingang D des Speichers SP4 verhindert, daß der Eingang D
auch nur kurzzeitig das Potential logisch "1" erhält.

Vom Ausgang $\overline{Q}$ des Speichers SP 3 wird das Potential logisch "0" zum Rücksetzeingang R des Speichers SP4 übertragen
mit der Folgewirkung, daß dieser Speicher nicht mehr zwangsweise zurückgesetzt wird. Hierdurch ist gewährleistet, daß
nur während des Vorlaufbetriebes eine Lichtmarke durch den
Speicher SP4 durchgeschoben werden kann. Auch wenn keine
Lichtmarken ausgewertet werden sollen, wird der Speicher SP4
freigegeben, da es während des Vorlaufes denkbar ist, daß
auch auf Lichtmarkenauswertung bzw. -betrieb geschaltet werden könnte.

Ist nun trotz nicht gewünschter Lichtmarkenerkennung im Speicher G26, G27 bereits eine Lichtmarke gespeichert, so wird mit dem Übergang von der Zugphase in die Standphase des Filmes (mit jeder Freigabephase des Speichers SP4) über das Gatter G29 der Speicher G26, G27 gelöscht (Steuerverbindung Q-Ausgang des Speichers SP3, Gatter G13, G12 und Gatter G24). Beim Übergang von der Standphase in die Zugphase ist am Eingang des Speichers SP4 logisch "0" vorhanden.

Bei gewünschter Lichtmarkenerkennung liegt am Eingang des Gatters G29 stets das Potential logisch "0" an, welches von dem Transistor T11 und dem Gatter G24 herrührt. Somit werden vorgespeicherte Lichtmarken nicht gelöscht und können im Bedarfsfall in den Speicher SP4 geschickt werden.

Vom Ausgang Q des Speichers SP2 gelangt das Potential logisch "1" über die Gatter G10 und G9 an den Eingang R des Speichers SP1 und sperrt diesen. Hierdurch ist es nicht möglich, während des Vorlaufes die Information "Einzelbild" in den Speicher SP1 einzuspeichern.

Während der Betriebsart "Vorlauf" hat die Taste 35 lediglich die Funktion einer Stoptaste.

Im folgenden wird nun bei Vorlaufbetrieb die Folgewirkung der Betätigung der Stoptaste 35 beschrieben.

Bei Betätigung der Vorlauftaste 35 wird das positive Potential vom Eingang $\overline{S}$ auf den Eingang S geschaltet. Mit Hilfe der Gatter G1 und G2 wird diese Taste 35 entprellt. Nach erfolgtem Tastendruck steht an den Ausgängen des Gatters G1 das Potential logisch "1" an, während an den Ausgängen des Gatters G2 das Potential logisch "0" anliegt. Vom Gatter G2 gelangt Nullpotential zum Eingang des Gatters G20 (Figur 2e). Dies hat jedoch keine Folgewirkung, da hier bereits
das Potential logisch "0" anliegt. Über eine andere Steuerleitung wird das Potential logisch "0" vom Gatter G2 zum
Eingang des Gatters G14 geleitet. Der Ausgang des Gatters G14 wird logisch "1". Das Potential logisch "1" wird am
Rücksetzeingang R des Speichers SP5 wirksam. Hierdurch wird
verhindert, daß während der gedrückten Stoptaste 35 das
gleichzeitige Betätigen der Vorlauftaste 34 im Speicher SP5
eine Folgewirkung hat.

Vom Gatter G1 gelangt das Potential logisch "1" zum Eingang
des Gatters G30, dessen Ausgang logisch "0" wird. Dies ist
deswegen möglich, weil der Ausgang des Speichers SP6 das
Potential "0" aufweist und somit der Ausgang des Gatters G17
das Potential logisch "1" aufweist. Das Nullpotential bzw.
Nullsignal am Ausgang des Gatters G30 wird auf den Eingang
des Gatters G1 übertragen. Somit wird der Stopbefehl des
Schalters 35 in dem aus den Gattern G1 und G30 bestehenden
Speicher festgehalten.

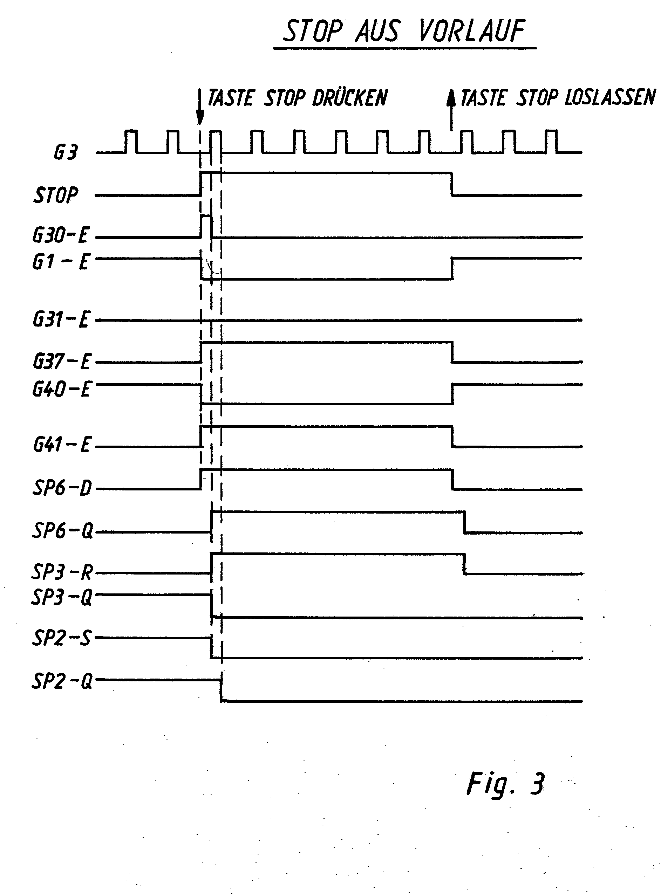

Das Signal logisch "1" am Ausgang des Gatters G1 wird durch
das Gatter G37 invertiert. Das Potential an einem dieser
Ausgänge gelangt zum Eingang des Gatters G43, wo es keine
Wirkung hervorruft, da dieser Eingang bereits das Potential
logisch "0" aufweist (vom Q-Ausgang des Speichers SP6, Gatter G17 und Q-Ausgang des Speichers SP10 sowie Gatter G34,
G35). Die anderen Ausgänge des Gatters 37 werden durch die
Gat- ter G40 und G49 potentialmäßig invertiert. Derjenige
Ausgang, der zum Eingang des Gatters G31 führt, kann
potentialmäßig nicht logisch "1" werden, da der
Speicher G44, G45 bereits nach der Inbetriebnahme des
Gerätes so gesetzt ist, daß am Aus- gang des Gatters G45 das
Potential logisch "0" anliegt, das auch an den Eingang des
Gatters G31 gelangt. Hierdurch wird signalisiert, daß der Stopbefehl aus der Betriebsart "Vorlauf" erfolgt. Ein Ausgang des Gatters G40 ist mit dem Eingang des Gatters G41
verbunden. Die Übertragung des Potentials vom Ausgang des
Gatters G40 zum Eingang des Gatters G41 ist deshalb möglich,
weil die Ausgänge des Gatters G44 das Potential logisch "1"
aufweisen. Dieses Potential wird über die Gatter G41 und G42
zum Eingang D des Speichers SP6 übertragen. Das Potential
logisch "1" wird erst mit dem nächsten Übergang von der
Standphase in die Zugphase des Greifersystems übernommen
(vergl. Impulsdiagramm nach Figur 3). Hierdurch wird die
asynchron betätigte Stoptaste 35 mit Hilfe des Speichers SP6
mit den Positionsimpulsen des Umlaufverschlusses synchronisiert. Mit dem Einspeichern des Potentials logisch "1" in
den Speicher SP6 wechselt das Potential am Ausgang $\overline{Q}$ von
logisch "1" auf logisch "0". Diese Flanke gelangt zum Takteingang T des Speichers SP1, wo sie jedoch wirkungslos ist,
weil der Rücksetzeingang R des Speichers SP1 das Potential
logisch "1" aufweist, welches vom Ausgang Q des Speichers SP2 und den Gattern G10 und G9 herrührt.

Außerdem wird der Ausgang Q des Speichers SP6 potentialmäßig logisch "1", welches Potential durch das Gatter G17
invertiert wird (logisch "0"). Von einem Ausgang wird das
Potential logisch "0" an den Eingang des Gatters G30 gelegt,
wodurch die Speicherung des Befehls "Stoptaste 35 gedrückt"
gelöscht wird. Der Ausgang des Gatters G1 behält nur noch so
lange das Potential logisch "1", bis die Stoptaste 35
losgelassen wird. Solange bleibt auch am Eingang D des
Speichers SP6 das Potential logisch "1" vorhanden.

Das am Ausgang Q des Speichers SP6 vorhandene Potential logisch "1" gelangt über die Gatter G17 und G16 zum Rücksetzeingang R des Speichers SP3 und setzt diesen zurück. Daraus
folgt, daß der Speicher SP4 wieder gesperrt wird, und daß

CW 2446.4 PP/MP                    - 27 -

durch das Signal logisch "1" des Gatters G13 wieder
Taktimpulse von G6 an den Takteingang T des Speichers SP3
gelangen. Außerdem wird durch die Gatter G13 und G12 der
Speicher SP2 nicht mehr zwingend gesetzt. Der Speicher SP2
speichert jedoch noch seine Information, und zwar so lange,
bis der Takteingang T potentialmäßig von logisch "1" auf
logisch "0" kippt.

Dies ist dann der Fall, wenn der Licht-Positionsschalter aus
der Zugphase 18a in die Standphase des Films wechselt
(vergl. Impulsdiagramm nach Figur 3). Es ist erkennbar, daß
nach der Übernahme der Stopinformation in den Speicher SP6
noch ein volles Bild transportiert wird. Dies ist aus folgenden Gründen von Bedeutung.

Während das letzte Bild gezogen bzw. transportiert wird, ist
der Speicher SP3 bereits zurückgesetzt. Das Signal mit dem
Potential logisch "0" gelangt vom Ausgang des Speichers SP3
über die Gatter G13 und G12 zum Eingang des Gatters G29. Damit wird eine evtl. vorhandene Sperre des Speichers G26 und
G27 aufgehoben, die dann wirksam ist, wenn keine Lichtmarken
erkannt werden sollen. Eine in dieser letzten Zugphase des
Filmes vorhandene Lichtmarke wird eingespeichert. Es wird
also grundsätzlich eine vom letzten transportierten Bild
herrührende Lichtmarke vorsichtshalber gespeichert, unabhängig davon, ob Lichtmarken erkannt und ausgewertet werden
sollen. Hierdurch ist die Voraussetzung für alle möglichen
Betriebsfälle nach der Stopfunktion gegeben.

Ein denkbarer Betriebsfall wäre der, daß aus dem Betrieb
"Vorlauf ohne Lichtmarkenerkennung" die Stoptaste betätigt
wird, bei Filmstillstand die Lichtmarkenerkennung eingeschaltet wird und anschließend wieder auf Vorlauf gedrückt
wird. Wurde nun eine Lichtmarke vorbereitend gespeichert, so transportiert der Greifer in diesem Falle nur ein Bild. Es
wird demnach bei im Filmstillstand nachträglich gewünschter
Filmmarkenerkennung kein Vorlaufbetrieb wirksam.

Dadurch, daß der Speicher SP1 durch die Speicher SP2 zurückgesetzt ist, liegt am Eingang D des Speichers SP2 das Potential logisch "0". Wird nun mit dem Übergang aus der Zugphase
des Films in die Standphase der Speicher SP2 zurückgesetzt,
so wird über die Transistoren T16 bis T20 der Magnet bestromt. Nach der sich hieran anschließenden Standphase darf
kein Bild mehr transportiert werden. Dies bedeutet, daß während dieser Zeit die Mechanik das Greifersystem außer Eingriff halten muß.

Der nicht mehr gesetze Speicher SP2 gibt über die Gatter G10
und G9 den Speicher SP1 frei. Gleichzeitig wird über die
Gatter G10 und G11 das Potential logisch "0" auf den Eingang
des Gatters G27 übertragen. Damit ist sichergestellt, daß
nur während einer tatsächlich vorhandenen Zugphase des Filmes Lichtmarken eingespeichert werden können.

Wird die Stoptaste 35 losgelassen, so werden die Ausgänge
des Gatters G1 logisch "0". Damit wird über die Gatter G37,
G40, G41 und G42 Nullpotential auf den Eingang D des Speichers SP6 übertragen. Erst mit dem Übergang von einer Standphase in eine Zugphase des Films wird das Nullpotential am
D-Eingang des Speichers SP6 in den Speicher übernommen. Erst
ab diesem Zeitpunkt ist der Speicher SP3 wieder frei.

Im folgenden wird nun das Anhalten des Filmes aufgrund eines
Lichtmarkensignals auf dem Film beschrieben.

Die Lichtmarkenerkennung wird dadurch freigegeben, daß der
am Eingang E der Schaltungsanordnung 30 befindliche Schalter 37 geöffnet wird.

Wird in einer Zugphase 18a eine Lichtmarke an der Lichtschranke (23, 24, 25, 26) vorbeigezogen, so wird der Fototransistor 26 leitend. Es erfolgt ein positiver Potentialsprung, der über den Kondensator 28 auf den Eingang L der
Schaltung 30 übertragen wird. Der Transistor T10 wird leitend, so daß am Ausgang des Gatters G15 das Potential logisch "1" anliegt. Da Vorlaufbetrieb vorhanden ist, liegt am
Ausgang des Gatters G11 ebenfalls das Potential logisch "1".
Auch liegt am Gatter G6 logisch "1" entsprechend der gerade
stattfindenden Zugphase des Films (Lichtimpuls). Dieses
Einspo tential kann nun am Speicher G26, G27 wirksam werden,
weil das Gatter G29 durch das Gatter G24 gesperrt wird. Der
Speicher G26, G27 wird gesetzt, so daß der Eingang D des
Speichers SP4 das Potential logisch "1" erhält. Der Takteingang T des Speichers SP4 weist zu diesem Zeitpunkt das Potential logisch "0" auf.

Nach Beendigung der Zugphase 18a des Greifers kippt der
Takteingang des Speichers SP4 auf logisch "1". Dies hat
jedoch für den Speicher SP4 keine Wirkung.

Es folgt nun die Standphase des Greifersystems (Nullphase
der Lichtimpulse). Mit dem Übergang von der Standphase in
die Zugphase kippt der Takteingang des Speichers SP4 von
logisch "1" auf logisch "0". Erst jetzt wird das Potential
logisch "1" des Eingangs D des Speichers SP4 von diesem
Speicher übernommen. Ist dies geschehen, führt der Ausgang Q
des Speichers SP4 logisch "1" und der Ausgang $\overline{Q}$ logisch
"0". Dieses am Ausgang $\overline{Q}$ vorhandene Potential logisch "0"
gelangt zum Eingang des Gatters G27 mit der Folgewirkung,
daß der Speicher G26, G27 gelöscht wird. Dies ist eine Art
Übernahmebestätigung. Das Potential logisch "1" am Ausgang Q
des Speichers SP4 gelangt über die Gatter G18 und G16 zum Rücksetzeingang R des Speichers SP3 und setzt diesen zurück. Hierdurch wird die in diesem Speicher festgehaltene Information "Vorlauf" herausgenommen.

Der Ausgang $\overline{Q}$ dieses Speichers SP3 erhält das Potential logisch "1", welches zum Rücksetzeingang R des Speichers SP4 gelangt und diesen zurücksetzt. Damit wechselt das Potential des Ausganges $\overline{Q}$ des Speichers SP4 von logisch "0" auf logisch "1". Der aus den Gattern G26 und G27 bestehende Speicher wird nicht mehr zwingend zurückgesetzt. Es ist nun wieder möglich, erneut eine Lichtmarke einzuspeichern.

Hier sei bemerkt, daß im betrachteten Betriebszustand der Beginn einer Zugphase vorliegt. Das Durchschieben der Lichtmarkeninformation durch den Speicher SP4 ist deswegen notwendig, da im ersten Zugzyklus die Lichtmarke in die Gatter G26, G27 eingeschrieben wird. Bevor der Film gestoppt wird, muß der Film noch um ein Bild weiter transportiert werden. Daher darf der Speicher SP3 erst nach der nächsten Standphase gelöscht werden.

Da beim Übergang aus der Zugphase in die Standphase des Films auch der Speicher SP2 gelöscht wird, muß vermieden werden, den Speicher SP3 mit dem Beginn der Standphase zu löschen.

Daher wird der flankengesteuerte Speicher SP4 verwendet. Als Steuerkriterium wird der eindeutig definierte Übergang von der Standphase in die Zugphase (positive Impulsflanke) verwendet. Sobald der Speicher SP3 gelöscht ist, ist der Zweck des Speichers SP4 erfüllt. Dieser wird wieder gelöscht, um für einen neuen Schiebezyklus bereit zu sein. Dies ist jedoch erst dann möglich, wenn der Speicher SP3 wieder gesetzt ist, wenn also wieder Bilder transportiert werden.

Der zurückgesetzte Speicher SP3 hebt das zwingende Setzen des Speichers SP2 über die Gatter G13 und G12 auf. Außerdem werden alle weiteren, vom Speicher SP3 herrührenden Sperren, die bei der Betriebsart "Stoppen aus dem Vorlauf heraus" beschrieben wurden, aufgehoben. Der Speicher SP2 bleibt jedoch noch gesetzt, wodurch gewährleistet ist, daß noch ein Bild transportiert wird. Am Ende der Zugphase wird der Speicher SP2 gelöscht, wobei die am Eingang D des Speichers SP2 anliegende Spannung logisch "0" durch den Potentialsprung von logisch "1" auf logisch "0" am Takteingang T in den Speicher übertragen wird.

Es ist also ersichtlich, daß zunächst die Lichtmarke zwischengespeichert wird, dann gelesen wird und daß nach einer Standphase noch ein volles weiteres Bild transportiert wird. Erst ab der nächstfolgenden Standphase wird der Magnet 19 zum Ausheben des Greifersystems aus der Filmperforation bestromt.

Es wird nun das zur betreffenden Lichtmarke zugehörige Bild projeziert. Außerdem treten alle jene Funktionen wieder ein, die beim normalen Stop aus dem Vorlauf heraus beschrieben wurden (Speicher SP1 frei, Lichtmarken gesperrt).

Es folgt nun eine Beschreibung der Einzelbildfunktion.

Der Projektor befindet sich im Stillstand. Es werden demzufolge keine Bilder transportiert, während sich der Umlaufverschluß dreht. Wird nun bei Stillstand des Films die Taste 35 betätigt, so wirkt diese Taste als Einzelbildtaste.

Ein positives Signal wird vom Eingang $\overline{S}$ auf den Eingang S übertragen. Mit Hilfe der Gatter G1 und G2 wird die Taste entprellt. Nach erfolgtem Tastendruck steht an den Ausgängen

des Gatters G1 das Potential logisch "1" an, während an den
Ausgängen des Gatters G2 das Potential logisch "0" anliegt.
Vom Gatter G2 gelangt das Potential logisch "0" an den Eingang des Gatters G20 (Figur 2e). Dies hat jedoch keine Wirkung, da an dieser Stelle bereits nach dem Einschalten der
Betriebsspannung und dem Rücksetzen der entsprechenden
Schaltstufen bereits das Potential logisch "0" anliegt.

Eine andere Leitung überträgt das Potential logisch "0" vom
Gatter G2 zum Eingang des Gatters G14 (Figur 2c). Der Ausgang dieses Gatters G14 erhält das Potential logisch "1",
welches am Eingang R des Speichers SP5 wirksam wird.

Hierdurch wird verhindert, daß während des Drückens der Taste 35 das gleichzeitige Betätigen der Vorlauftaste 34 im
Speicher SP5 festgehalten wird. Dies bedeutet, daß die
Stop- und Einzelbildtaste 35 gegenüber der Vorlauftaste bevorrechtigt ist.

Vom Gatter G1 gelangt logisch "1" zum Eingang des Gatters G30, dessen Ausgang das Potential logisch "0" erhält.
Dieses Signal wird auf den Eingang des Gatters G1 zurückübertragen. Hiermit ist der Stop-Befehl in dem aus den Gattern G1 und G30 bestehenden Speicher festgehalten.

Dieser separate Speicher G1, G30 ist notwendig, um die
Stop-Informationen bei sehr kurzer Betätigung der Taste 35
so lange festzuhalten, bis sie in den Speicher SP6 übernommen wird. Andererseits muß eine Möglichkeit bestehen, bei
dauerndem Tastendruck diesen Speicher wieder zu löschen.

Ein Ausgang des Gatters G1 ist mit dem Eingang G37 verbunden, dessen Ausgänge logisch "0" werden. Einer dieser Ausgänge legt das Potential logisch "0" an den Eingang des Gatters G43, was jedoch keine Wirkung zeigt, da dieses Gatter bereits durch das Gatter G35 auf logisch "0" gehalten wird. Die anderen Ausgänge des Gatters G37 sind mit dem Eingang des Gatters G40 und G49 verbunden.

Da sich die Schaltung in der Stop-Phase befindet, ist der aus den Gattern G44 und G45 bestehende Speicher nicht gesetzt. Hieraus ergibt sich, daß der Eingang des Gatters G31 das Potential logisch "0" aufweist, während der Eingang des Gatters G41 das Potential logisch "1" hat. Dieses Potential logisch "1" gelangt über die Gatter G41 und G42 zum D-Eingang des Speichers SP6.

Mit dem nächsten Übergang von der Standphase in die Zugphase des Films erhält der Takteingang T des Speichers SP6 einen Potentialsprung von logisch "1" auf logisch "0" mit der Folgewirkung, daß das am D-Eingang anliegende Potential logisch "1" zum Ausgang Q des Speichers SP6 gelangt. Das Potential logisch "1" des Ausganges Q des Speichers SP6 wird über die Gatter G17 und G16 zum Rücksetzeingang R des Speichers SP3 geleitet.

Im Unterschied zum Stop-Betrieb aus dem Vorlauf heraus ist dieser Speicher bereits zurückgesetzt, mit der Folgewirkung, daß die Übermittlung des Potentials logisch "1" an den Rücksetzeingang R des Speichers SP3 keine Folgewirkung zeigt.

Von einem Ausgang des Gatters G17 wird das Potential logisch "0" an den Eingang des Gatters G30 gelegt, wodurch die Speicherung der Einzelbildtastenbetätigung 35 aufgehoben wird. Die Ausgänge vom Gatter G1 bleiben so lange noch potentialmäßig auf logisch "1" bis die Stop- und Einzelbildtaste 35 wieder freigegeben wird.

Der Potentialsprung von logisch "1" auf logisch "0" des
Speichers SP6 gelangt zum Takteingang T des Speichers SP1,
wo er anders als bei der Betätigung der Stop-Taste aus dem
Vorlauf heraus wirksam werden kann. Da der Speicher SP3 und
demzufolge auch der Speicher SP2 nicht gesetzt ist, weist
der Rücksetzeingang R des Speichers SP1 das Potential
logisch "0" auf. Da der Setzeingang S stets auf logisch "0"
liegt, kann der Speicher SP1 tätig werden. Am Eingang D des
Speichers SP1 liegt das Potential logisch "1" an. Im Zeitpunkt, in dem am Ausgang $\overline{Q}$ des Speichers SP6 das Potential von logisch "1" auf logisch "0" springt, tritt am Ausgang Q des Speichers SP1 das Potential logisch "1" auf. Das
Potential logisch "1" wird vom Ausgang Q des Speichers SP1
auf den Eingang D des Speichers SP2 zurückgeführt.

Das am Ausgnang $\overline{Q}$ des Speichers SP1 anliegende Potential
logisch "0" wird zum Eingang des Gatters G27 überführt und
eine dem Speicher G26, G27 evtl. festgehaltene Lichtmarkenerkennung gelöscht.

Hierdurch wird sichergestellt, daß vor dem eigentlichen
Filmtransport der Speicher G26, G27 frei ist für eine neue
Lichtmarke. Außerdem sind die Stillsetzmaßnahmen die gleichen wie bei einer Lichtmarkenerkennung. Eine evtl. neu auftretende Lichtmarke muß außerdem festgehalten werden, damit
nach erfolgtem Einzelbild ein Befehl "Vorlauf zu einem
Lichtmarkenstop" führt. Diese Vorspeicherung erfolgt auf jeden Fall, auch wenn Einzelbilder nicht erkannt werden sollen.

Mit dem nächsten Übergang von einer Zugphase in eine Standphase des Bildes (entsprechend der Impulsflanke von logisch
"1" auf logisch "0") wird das am Eingang D des Speichers SP2
anliegende Potential logisch "1" übernommen. Der Ausgang Q
erhält das Potential logisch "1", welches über die Gat-

ter G10 und G9 den Speicher SP1 zurücksetzt. Am Eingang D
des Speichers SP2 liegt somit wieder das Potential logisch
"0" an. Die Aufgabe des Speichers SP1 liegt darin, die geforderte Information "Einzelbild" so weiterzuleiten, daß
einerseits eine schon vorgespeicherte Lichtmarke aus dem
Speicher G26, G27 vor dem eigentlichen Filmtransport herausgenommen wird und daß andererseits exakt beim Übergang von
der Zugphase in die Standphase synchronisiert wird. Hierdurch erhält die beteiligte Mechanik die Möglichkeit, in der
Standphase wirksam zu werden.

Der Ausgang Q des nun wieder gelöschten Speichers SP1 gibt
den Speicher G26 und G27 wieder frei, damit eine evtl. auftretende Lichtmarke festgehalten werden kann.

Das Signal logisch "1" des Ausganges Q des Speichers SP2 gelangt auch über die Gatter G10 und G 11 zum Eingang des Gatters G27. Diese Leitung führte bis dahin noch das Potential
logisch "0", und zwar herrührend vom Gatter G6, da zu dieser
Zeit die Bildstandphase vorliegt.

Während der nächsten Zugphase wird der Eingang des Gatters G27 nur noch durch das Gatter G15 auf logisch "0" gehalten. Tritt nun eine Lichtmarke auf, so wird auch dieses
Gatter potentialmäßig logisch "1". Der Eingang des Gatters G27 springt potentialmäßig auf logisch "1" mit der Folgewirkung, daß der Speicher G26 und G27 gesetzt wird.

Das Signal logisch "0" des Ausganges $\overline{Q}$ des Speichers SP2
gelangt nun zu den Transistoren T16 bis T20 mit der Folgewirkung, daß der Magnet 19 entstromt wird und das Greifersystem wirksam werden kann.

Mit der nächsten Greiferzugphase wird ein Bild weitertransportiert und eine evtl. auftretende Lichtmarke im Speicher G26, G27 festgehalten. Am Ende dieser Zugphase wird mit
dem Übergang auf eine Standphase der Ausgang des Gatters G6
potentialmäßig von logisch "1" auf logisch "0" geschaltet
mit der Folgewirkung, daß die am Eingang D des Speichers SP2
anliegende Spannung logisch "0" vom Speicher SP2 übernommen
wird.

Der Ausgang $\overline{Q}$ des Speichers SP2 wird logisch "1" mit der
Folgewirkung, daß über die Transistoren T16 bis T20 der Magnet 19 wieder bestromt wird. Das Greifersystem wird über den
Anker des Magneten 19 ausgekuppelt. Der Film kann demzufolge
nicht weitertransportiert werden.

Der Ausgang Q des Speichers SP2 weist das Potential logisch
"0" auf. Dieses Potential wird über die Gatter G10 und G9
dem Speicher SP1 zugeführt mit der Folgewirkung, daß dieser
wieder freigegeben wird.

Im Bedarfsfalle kann nun ein neues Steuersignal "Einzelbild"
eingespeichert werden.

Über die Gatter G10 und G11 wird die Einspeicherung von
Lichtmarken gesperrt. Die Schaltungsanordnung befindet sich
nun in der Phase "Stop".

War nun während der Zugphase, in der das Bild bzw. der Film
transportiert wird, eine Lichtmarke vorhanden, so wird diese
unabhängig davon, ob Lichtmarken erkannt werden sollen oder
nicht, im Speicher G26, G27 festgehalten bzw. gespeichert.
Wird nun nach den zuvor beschriebenen Einzelbildvorgängen
eine Lichtmarkenerkennung gewünscht und die Vorlauftaste 34 betätigt, so wird zwangsläufig die vorgespeicherte Lichtmarke erkannt. Demzufolge wird dann nur ein Bild weitertransportiert.

Solange die Stop- und Einzelbildtaste 35 betätigt bleibt,
ist es unmöglich, ein weiteres Einzelbild zu transportieren.
Ebenso ist es dann unmöglich, auf Vorlauf umzuschalten. Nur
die Rücklauftaste weist eine Bevorrechtigung auf. Erst wenn
die Stop- und Einzelbildtaste 35 losgelassen wird, befindet
sich die Schaltung wieder um ursprünglichen Schaltungszustand.

Dadurch, daß zwischen zwei Betätigungen des Stop-Schalters
bei zuvor stillstehendem Film oder bei zuvor im Vorlauf befindlichem Film logisch "0" an den Eingang D des Speichers SP6 gelangen muß, kann die Stop-Taste auch als Einzelbildtaste verwendet werden.

Im folgenden wird nun die Funktion des Rücklaufs beschrieben.

Die Funktion "Rücklauf" ist allen anderen Funktionen gegenüber bevorrechtigt. Somit ist es gleichgültig, in welcher
Funktionsphase der Projektions-Schaltungsanordnung 30 die
Rücklauftaste 36 betätigt wird. Die Ausführung des Signals
"Rücklauf" erfolgt sofort. Hierbei erfolgt keine Synchronisation auf den Umlaufverschluß-Positionslichtschalter.

Wird nun die Rücklauftaste 36 betätigt, so wird das positive
Signal vom Eingang $\overline{R}$ auf den Eingang R der Schaltungsanordnung 30 übertragen. Mit Hilfe der Gatter G38 und G39 wird
dieses Rücklaufsignal entprellt.

Am Ausgang des Gatters G39 liegt der daher das Potential logisch "0". Das vom Gatter G39 kommende Potential logisch "0"
gelangt an den Eingang des Gatters G21 und setzt den aus den
Gattern G20 und G21 aufgebauten Speicher. Dieser Speicher
hält den Befehl "Rücklauf" auch nach losgelassener Rücklauftaste 36 fest.

Ein Ausgang des Gatters G21 ist mit dem Eingang des Gatters G22 verbunden, dessen Ausgänge logisch "0" werden.
Einer dieser Ausgänge legt das Potential logisch "0" an das
Gatter G9 (vergl. Figur 2b), welches bei ausgangsseitigem
Potential logisch "1" den Speicher SP1 zurücksetzt für den
Fall, daß in diesem Speicher gerade ein Einzelbild eingespeichert ist.

Ein Ausgang des Gatters G22 bewirkt über eine entsprechende
Steuerleitung das Setzen des Speichers G44, G45. Somit ist
neben der Betätigung des Rücklaufschalters 36 der Befehl
"Rücklauf" gespeichert, und zwar so lange, bis eine vorgegebene Zeitspanne, welche durch die Speicher SP7 bis SP10
gegeben ist, abgelaufen ist. Außerdem wird in diesem Speicher entschieden, ob eine von der Stop- und Einzelbildtaste 35 herrührende Information über die Zeitverzögerung
oder direkt zum Speicher SP6 laufen soll.

Die Ausgänge des Gatters G23 erhalten das Potential logisch
"1". Einer dieser Ausgänge setzt den Speicher SP2 zurück.
Ist der Elektromagnet 19 gerade unbestromt, so wird er aufgrund der Rücksetzung des Speichers SP2 bestromt. Die Folgewirkung ist, daß das Greifersystem aus der Perforation des
Filmes 13 gehoben wird.

Ein weiterer Ausgang des Gatters G23 setzt über die Gatter G31, G32 und G33 die Speicher SP7, SP8, SP9 und SP10 zurück. Eine vielleicht laufende Zeitverzögerung wird sofort gestoppt.

Ein dritter Ausgang des Gatters G23 legt das Potential logisch "1" über die Gatter G19 und G16 an den Speicher SP3 und setzt diesen ebenfalls zurück, falls ein Vorlaufsignal eingespeichert worden war. Außerdem wird über die Gatter G19 und G14 der Speicher SP5 zurückgesetzt.

Da die Ausgänge des Gatters G19 das Potential logisch "0" erhalten, wirkt dieses Signal auf den aus den Gattern G26 und G27 aufgebauten Speicher und setzt ihn in seine Ruhelage zurück. Eine evtl. eingespeicherte Lichtmarke des Films wird hiermit gelöscht.

Der Speicher SP4 wird vom zurückgesetzten Speicher SP3 ebenfalls zurückgesetzt.

Sämtliche, vom Rücklaufsignal der Rücklauftaste 36 bewirkten Sperren bleiben so lange erhalten, solange der Speicher G20, G21 gesetzt bleibt. Dadurch sind auch sämtliche Positionsschalterimpulse am Eingang P unwirksam. Die Funktion "Rücklauf" hat daher vor sämtlichen anderen Betriebsarten Vorrang und greift in entsprechender Weise in die Schaltungsanordnung ein.

Das Löschen des Speichers G20, G21 ist nur über die Stop-Taste 35 möglich. Hierdurch wird erreicht, daß von Rücklauf nicht direkt auf Vorlauf geschaltet werden kann. Das Löschen erfolgt über die Anschlußverbindung A10.

Im folgenden wird nun das Stoppen des Films nach betätigter Rücklauftaste beschrieben.

Es wird angenommen, daß die Rücklauftaste 36 gedrückt und
wieder losgelassen ist. Somit ist die Rücklauffunktion in
Betrieb. Der Film wird nun ohne Greifer durch einen mechanischen bzw. elektromechanischen Antrieb rückwärts transportiert.

Wird in diesem Betriebszustand die Vorlauftaste gedrückt, so
gelangt eine Flanke von logisch "1" auf logisch "0" an den
Eingang T des Speichers SP5. Diese Flanke bleibt jedoch ohne
Wirkung, da am Eingang R des Speichers SP5 das Rücksetzpotential logisch "1" anliegt. Demnach kann aus dem Rücklaufbetrieb nicht in den Vorlaufbetrieb umgeschaltet werden.

Die einzige Möglichkeit, die Rücklauffunktion aufzuheben,
besteht darin, daß die Stop- und Einzelbildtaste 35 betätigt
wird. Wird nun diese Taste 35 betätigt, so wird das Potential an den Ausgängen des Gatters G1 logisch "1", während
die Ausgänge des Gatters G2 logisch "0" werden.

Einer dieser Ausgänge des Gatters G2 übermittelt das Potential logisch "0" an den Eingang des Gatters G20. Dadurch
wird der aus den Gattern G20 und G21 bestehende Speicher gelöscht.

An dieser Stelle sei bemerkt, daß dies nur bei losgelassener
Rücklauftaste 36 möglich ist, da sonst der Ausgang des Gatters G20 zwar das Potential logisch "1" erhält, der Eingang
von G21 aber vom Gatter G39 auf dem Potential logisch "0"
gehalten wird.

Werden nun die Stop- und Einzelbildtaste 35 und die Rücklauftaste 36 zugleich betätigt, so ist durch die zuvor beschriebene Verknüpfungsart des Speichers G20, G21 garantiert, daß die Funktion des Rücklaufs der Funktion des Stoppens bevorrechtigt ist. Alle für den Rücklauf notwendigen Signale müssen daher vom Gatter G21 abgeleitet werden.

Nachdem nun der Speicher G20, G21 zurückgesetzt ist (über die Anschlußleitung A10), werden alle vom Gatter G21 ausgegebenen Sperren wieder aufgehoben. Die Schaltungsanordnung befindet sich bis auf eine Ausnahme im Potentialzustand bei Einschaltung der Betriebsspannung mit dem hiermit verbundenen Rücksetzen. Dieser Unterschied zum Einschalten der Betriebsspannung liegt darin begründet, daß der Speicher G44, G45 noch immer gesetzt ist. Dies bedeutet, daß die bereits beendete Rücklauffunktion gespeichert bleibt. Der Speicher G44, G45 bildet demnach einen Erinnerungsspeicher.

Der Signalinhalt dieses Erinnerungsspeichers G44, G45 und die vom Stop-Schalter 35 herrührende Information bewirken gemeinsam die Einschaltung einer Zeitfunktion.

Hierbei gelangt das Potential logisch "1" vom Gatter G1 über die Gatter G37 und G49 zum Gatter G31. Das vom Gatter G44 kommende Potential logisch "0" sperrt das Gatter G41 und verhindert eine sofortige Einspeicherung in den Speicher SP6. Die Ausgänge des Gatters G31 sind nun alle potentialmäßig auf logisch "0", was zur Folge hat, daß die Speicher SP7 bis SP10 nicht mehr zurückgesetzt sind.

Die Speicher SP7 bis SP10 bilden eine Zählkette. Sie sind nicht mehr zwingend zurückgesetzt, wobei die Speicher SP7 und SP8 direkt und die Speicher SP9 und SP10 über die Gatter G32 und G33 mit dem Gatter G31 verbunden sind.

Die vom Eingang P herkommenden Positionsschalterimpulse werden über den Transistor T3 und das Gatter G3 so an den Eingang T des Speichers SP7 geleitet, daß immer beim Übergang
von der Zugphase in die Standphase des Films (Übergang von
logisch "1" auf logisch "0") ein Schritt weitergezählt wird.
Da die Speicher SP7 bis SP10 zuvor über ihre Eingänge R
zwingend zurückgesetzt waren, steht auch nach der Aufhebung
dieses Rücksetzsignals an ihren Ausgängen $\overline{Q}$ das Potential
logisch "1" an. Dies gilt auch für den Ausgang $\overline{Q}$ des
Speichers SP7, der mit dem Eingang D des gleichen Speichers
verbunden ist.

Sobald am Eingang T des Speichers SP7 ein Taktimpuls (Flanke
von logisch "1" auf logisch "0") auftritt, wird die am Eingang D anliegende Spannung von logisch "1" in den Speicher
übernommen. Damit steht nach dieser Flanke am Ausgang Q des
Speichers SP7 das Potential logisch "1" an, während an dessen Ausgang $\overline{Q}$ das Potential logisch "0" vorhanden ist.

Beim nächsten Positionsimpuls (Flanke von logisch "1" auf
logisch "0") am Eingang T des Speichers SP7 wird nun das am
Eingang D anliegende Potential logisch "0" in den Speicher SP7 übernommen. Damit steht am Ausgang Q wieder das Potential logisch "0", während am Ausgang $\overline{Q}$ das Potential
logisch "1" vorhanden ist. Dieser Potentialsprung wird vom
Ausgang Q an den Takteingang T des Folgespeichers SP8 weitergeleitet. Dieser übernimmt das am Eingang D anliegende
Potential logisch "1". Die Speicher SP7 bis SP10 arbeiten
wie ein Dualzähler, wobei jeder Speicher die am Eingang T
anliegende Frequenz durch zwei teilt.

Nach acht Impulsen, die einer Zeit von ungefähr 0,5 Sekunden
entsprechen, wird der Ausgang Q des Speichers SP10 potentialmäßig auf logisch "1" gesetzt. Über das Gatter G34 wird
dieses Signal invertiert (logisch "0"). Das Potential logisch "0" gelangt an den Eingang T des Speichers SP7 und
verhindert ein weiteres Einzählen von Positionsschaltimpulsen in die Zählkette SP7 bis SP10.

Der Ausgang $\overline{Q}$ des Speichers SP10 wird potentialmäßig logisch "0". Dieses Potential gelangt nun an den Eingang des
Gatters G49. Somit wird der Ausgang des Gatters G49 potentialmäßig zwingend auf logisch "1" gehalten. Hierdurch wird
erreicht, daß nur der zurückgesetzte Speicher G44 und G45
die Zählkette zurücksetzen kann.

Das Potential logisch "0" des Gatters G34 gelangt nun zum
Gatter G35, dessen Ausgang das Potential logisch "1" annehmen könnte. Dies ist jedoch nicht möglich, da der zweite
Eingang des Gatters G35 vom Ausgang des Gatters G17 auf
logisch "1" gehalten wird.

Das Potential logisch "0" des Gatters G34 gelangt zum Gatter G42, dessen Ausgang logisch "1" wird. Dieses Signal
liegt nun am Eingang D des Speichers SP6. Mit dem nächsten
Übergang von einer Standphase in eine Zugphase des Films
übernimmt der Speicher SP6 das am Eingang D anliegende Potential logisch "1". Damit wird der Ausgang Q des Speichers SP6 auf logisch "1" geschaltet. Das Potential logisch
"1" wird nun über das Gatter G17 zu logisch "0" gekehrt und
zum Gatter G35 (Figur 2e) geleitet. Der Ausgang des
Gatters G35 möchte nun potentialmäßig auf logisch "1"
umschalten, was jedoch nicht möglich ist, da er durch das
Gatter G37 noch auf logisch "0" gehalten wird. Außerdem
gelangt das Potential logisch "1" über die Gatter G17 und
G16 zum Rücksetzeingang R des Speichers SP3. Dies zeigt
jedoch keine Wirkung, da dieser Speicher bereits zurückgesetzt war.

Der Ausgang $\overline{Q}$ des Speichers SP6 kippt von logisch "1" auf
logisch "0". Dieser Potentialsprung wird in den Speicher SP1 eingespeichert mit der Folgewirkung, daß die Betriebsfunktion "Einzelbild" eingeleitet wird.

Der Ausgang des Gatters G17 legt das Potential logisch "0" an den Eingang des Gatters G30. Hierdurch wird die im Speicher G1 und G30 gespeicherte Stop-Funktion gelöscht.

Ist nun die Stop-Taste 35 noch betätigt, so liegt am Eingang des Gatters G1 immer noch das Potential logisch "0" an. Erst wenn die Taste losgelassen wird, kann die vom Gatter G30 kommende Potentialinformation logisch "1" wirksam werden.

Dies hat zur Folge, daß die Ausgänge des Gatters G1 logisch "0" werden. Damit erhalten die Ausgänge des Gatters G37 das Potential logisch "1" mit der Folgewirkung, daß die letzte Sperre der Verbindung der Gatter G35, G37 und des Gatters G43 aufgehoben wird.

Erst jetzt wird der Ausgang des Gatters G43 logisch "0" und der sogenannte Erinnerungsspeicher G44, G44 für den Rücklauf gelöscht.

Obwohl die Stop-Taste 35 losgelassen wurde, gelangt das Potential logisch "0" nicht an den Eingang des Gatters G31, weil das Potential logisch "0" vom Ausgang $\overline{Q}$ des Speichers SP10 zum Gatter G49 gelangt. Die Weiterleitung des Potentials logisch "0" an den Eingang des Gatters G31 erfolgt erst, nachdem der Erinnerungsspeicher G44, G45 tatsächlich gelöscht ist, da dieser dann vom Gatter G45 das Potential logisch "0" an das Gatter G31 legt.

Erst jetzt wird die Zählkette gelöscht. Der Ausgang des Speichers SP10 wird logisch "0". Dieses Nullpotential wird über die Gatter G34 und G42 an den D-Eingang des Speichers SP6 weitergeleitet. Der logische Zustand für das Stoppen des
Films ist erreicht. Der Film steht positionsgerecht vor dem
Bildfenster.

Im folgenden wird nun die Timer-Funktion der Schaltungsanordnung 30 beschrieben.

Die Timer-Schaltung bildet eine für sich eigene Schaltungsgruppe. Aus den Transistoren T26 bis T33 ist eine Differenzstufe aufgebaut, bei der an der Basis des Transistors T31
durch die Widerstände R27 und R28 eine Referenzspannung erzeugt wird. Die Basis des Transistors T26 wird über die Anschlußstelle C mit einem Zeitkondensator 32 verbunden, der
zusammen mit dem einstellbaren Widerstand 31 ein Zeitglied
bildet. Sobald die Schwellwertspannung des Transistors G26
erreicht wird, kippt die Differenzstufe und der Transistor T25 wird leitend.

Der Ausgang des Gatters G50 weist nun das Potential logisch
"1" auf. Dieses Potential logisch "1" wird über das Gatter G36 invertiert (logisch "0"). Dieser logische Potentialsprung wird am Eingang T des Speichers SP5 wirksam. Damit
ist die Funktion des Vorlaufes eingeleitet und erfolgt wie
bereits zuvor beschrieben.

Sobald der Speicher SP2 gesetzt ist, gelangt das Potential
logisch "1" über die Gatter G10 und G11 an das Gatter G4.
Der Ausgang des Gatters G4 erhält das Potential logisch "0".
Damit wird einerseits über das Gatter G36 das Potential logisch "1" an den Speicher SP5 gelegt. Andererseits wird über
die Gatter G52 und G53 der an der Anschlußstelle C angeschlossene Zeitkondensator 32 über die Widerstand R24 entladen.

Eine ähnliche Wirkung weist der Eingang T in Figur 2f auf.
Ist dieser geöffnet, so gelangt das Potential logisch "0" an
die Ausgänge des Gatters G28. Hierdurch wird ein evtl. aufgeladener Zeitkondensator 32 über die Gatter G52 und G 53
sofort entladen.

Beide Varianten, nämlich Vorlauf oder offener Eingang T bewirken, daß der Kondensator ständig entladen bleibt. Erst
wenn der Vorlauf gestoppt wird und am Eingang T die geregelte Spannung $U_S$ anliegt, kann sich der Kondensator aufladen.

Eine Ausnahme bildet der Stop-Vorgang aus dem Rücklauf heraus. In diesem Fall gelangt das Potential logisch "0" vom
Gatter G48 an den Eingang des Gatters G52. Damit kann sich
der Kondensator nicht aufladen, obwohl am Eingang T positives Signal anliegt und kein Vorlauf stattfindet. Wird aus
dem Rücklaufbetrieb gestoppt, so läuft zunächst eine durch
die Zählkette SP7 bis SP10 bestimmte Zeit ab. Auch während
dieser Zeit darf der Kondensator noch nicht aufgeladen werden. Dies verhindert das Gatter G51, welches so lange das
Potential logisch "0" an das Gatter G52 legt, wie der Zähler
läuft oder solange die Stop-Taste 35 gedrückt bleibt. Bei
gedrückter Stop-Taste leitet der Timer keinen Vorlauf ein.
Dies gilt auch beim Stoppen aus dem Vorlauf heraus sowie bei
Einzelbild.

Die Verbindung des Gatters 48 mit dem Eingang des Gatters G52 verhindert beim Rücklauf, daß sich der Kondensator
auflädt.

Die Verbindung des Gatters G46 mit dem Eingang S des Speichers SP6 bewirkt, daß der Speicher SP6 beim Einschalten der
Betriebsspannung definiert gesetzt wird. Damit kann eine vor dem Anlegen der Betriebsspannung gedrückte Stop-Taste nicht
zu einem Einzelbild führen. In diesem Falle wird sofort der
Stop-Befehl als solcher weitergeleitet.

Bei Betätigung der Stoptaste 35 und nachfolgendem Anhalten
des Films oder bei Einzelbildbetrieb oder nach Anhalten des
Films aufgrund einer Bild-Markierung auf dem Film erfolgt
durch das Gatter G11 in Verbindung mit den Steuerleitungen A17 und A27 und in Verbindung mit den Gattern G4 und
G28, G52 die Einschaltung der Timerschaltung. Nach Ablauf
der Timer-Zeit erfolgt automatisch eine Taktung des Vorspeichers SP5 über die Steuerleitung A28. Hierdurch (Steuerpotentialsprung von logisch "1" auf logisch "0") wird die
Steuerschaltung auf Vorlaufbetrieb geschaltet.

AGFA-GEVAERT AG

0047495

LEVERKUSEN

CAMERA-WERK MÜNCHEN
PATENTABTEILUNG

CW 2446.4 PP/MP

05.09.80
10-vf-ni, 100C

Ansprüche

1. Laufbildgerät, vorzugsweise Laufbildprojektor, mit
   einem durch einen elektrischen Antrieb drehbaren Umlaufverschluß, mit einer durch den elektrischen Antrieb
   gesteuerten Greifervorrrichtung für den Filmtransport,
   wobei die Greifervorrichtung in der Abdeckphase des
   Bildfensters durch einen Verschlußsektor den Film bildweise weitertransportiert und mit einem Elektromagneten, durch dessen Anker die Greifervorrichtung mit dem
   Film kuppelbar bzw. vom Film entkuppelbar ist, <u>dadurch
   gekennzeichnet,</u> daß der Umlaufverschluß (2) für einen
   Impulsgenerator (8, 9, 7, 11, 12) Steuermittel aufweist, die so am Umlaufverschluß angeordnet sind, daß
   dessen Impulse hinsichtlich ihrer Dauer und Phase jeweils mit der Greiferzugphase (18a) in Filmtransportrichtung (A) übereinstimmen und als Positionsimpulse (P) ständig an einer Steuerschaltung (30) für den
   Elektromagnet (19) anliegen, daß die Steuerschaltung (30), die mit Funktionsschaltern (S, L, V, R), wie
   z. B. einem Vorlauf- und Stopschalter verbunden ist,
   mit Takteingängen (T), Setz- und/oder Rücksetzeingängen (S, R) versehene Speicherkippstufen (SP1 bis SP6)
   aufweist, von denen mindestens einer Speicherkippstufe (SP2, SP3) das Steuersignal eines Funktionsschalters (V, S), angeboten wird, das mittels der Impulsflanke am Ende des Greiferzuges (18a) eines dem Steuersignal folgenden Positionsimpulses über den Setz- oder
Takteingang zumindest in die mit dem Elektromagnet (19)
zusammenwirkende Ausgangs-Speicherstufe (SP2) zur positionsgerechten Be- oder Entstromung des Elektromagneten (19) am Ende der Greiferzugphase des Greifersystems (15, 16) eingespeichert wird.

2.  Laufbildgerät nach Anspruch 1, dadurch gekennzeichnet,
    daß mindestens eine (SP4 bzw. SP6) der getakteten Spei-
    cherkippstufen (SP1 bis SP6) über ihren Takteingang
    durch die zu Beginn der Greiferzugphase (18a) auftretende Impulsflanke eines dem Funktionsschaltersignal
    folgenden Positionssignals im Sinne einer Zwischenspeicherung des betreffenden Funktionssignals kippbar
    ist und daß das betreffende Funktionssignal bei der
    nächstfolgenden Impulsflanke am Ende der Greiferzugphase (18a) des Positionsimpulses in die Ausgangs-Speicherkippstufe (SP2) eingespeichert wird.

3.  Laufbildgerät nach Anspruch 1 oder 2, dadurch gekennzeichnet, daß eine Vorlauftaste (V) mit dem Steuereingang (D) einer Vorlauf-Speicherkippstufe (SP3) verbunden ist, deren Takteingang (T) eine Steuerleitung zum
    Positions-Signaleingang (P) aufweist und nur durch die
    Impulsflanke am Ende der Greiferzugphase (18a) beeinflußbar ist, daß der Ausgang (Q) der Vorlauf-Speicherkippstufe (SP3) mit dem Setzeingang (S) der Ausgangs-Speicherkippstufe (SP2) verbunden ist, daß der
    Stopschalter (S) mit dem Steuereingang (D) einer Zwischen-Speicherkippstufe (SP6) verbunden ist, deren
    Takteingang (T) eine Steuerleitung zum Positions-Signaleingang (P) aufweist und nur durch die Impulsflanke am Anfang der Greiferzugphase (18a) beeinflußbar ist
und daß der Ausgang (Q) der Zwischen-Speicherkippstufe (SP6) eine Steuerleitung zum Rücksetzeingang (R)
der Vorlauf-Speicherkippstufe (SP3) aufweist.

4.  Laufbildgerät nach Anspruch 3, dadurch gekennzeichnet,
    daß der Ausgangs-Speicherkippstufe (SP2) eine im Vor-
    wärtsbetrieb zwangsweise zurückgesetzte Einzel-
    bild-Speicherkippstufe (SP1) zugeordnet ist, deren Aus-
    gang (Q) mit dem Steuereingang (D) und deren Rücksetzeingang (R) mit dem Ausgang (Q) der Ausgangs-Speicherkippstufe (SP2) verbunden ist, daß der Takteingang (T)
    der Einzelbild-Speicherkippstufe (SP1) eine Steuerleitung mit dem Ausgang der Zwischen-Speicherkippstufe (SP6) aufweist, daß bei Betätigung des Stopschalters (S) die zwangsweise Rücksetzung der Vorlauf-Speicherkippstufe (SP3) und die zwangsweise Setzung der
    Ausgangs-Speicherkippstufe (SP2) aufgehoben werden, daß
    bei erneuter Betätigung des nun als Einzelbildschalter
    wirkenden Stopschalters (S) nach Ablauf mindestens
    eines Positionsimpulses (P) mit der Anstiegsflanke am
    Anfang des Greiferzugs des Positionsimpulses (P) die
    Einzelbild-Speicherkippstufe (SP1) gesetzt wird und die
    Ausgangs-Speicherkippstufe (SP2) für eine Positionsimpulsperiode, beginnend mit der Abstiegsflanke des Positionsimpulses, gesetzt bleibt.

5.  Laufbildgerät nach Anspruch 4, dadurch gekennzeichnet,
    daß die Einzelbild-Speicherkippstufe (SP1) einen unbeschalteten bzw. mit festem Steuerpotential versehenen
    Steuereingang aufweist.

6.  Laufbildgerät mit auf dem Film vorgesehenen Markierungen und einer auf die Markierungen ansprechenden Erkennungsschaltung nach Anspruch 4 oder 5, dadurch gekennzeichnet, daß für die Bildmarkierungsimpulse (L) eine
    Steuerleitung mit dem Steuereingang (D) einer Bildmarkierungs-Speicherkippstufe (SP4) verbunden ist, deren
    Ausgang (Q) mit dem Rücksetzeingang (R) der Vorlauf-Speicherkippstufe (SP3) und dessen Rücksetzeingang (R) der Vorlauf-Speicherkippstufe (SP3) und dessen
    Rücksetzeingang (R) mit dem invertierenden Aus-
    gang ($\overline{Q}$) der Vorlauf-Speicherkippstufe (SP3) verbunden ist, und daß der Takteingang (T) der Bildmarkierungs-Speicherkippstufe (SP4) durch die Impulsflanke am
    Anfang der Greiferzugphase des Positionsimpulses gesteuert wird.

7.  Laufbildgerät nach einem der vorhergehenden Ansprüche,
    dadurch gekennzeichnet, daß die Speicherkippstufen
    flankengesteuerte D-Flip-Flops sind.

8.  Laufbildgerät nach einem der vorhergehenden Ansprüche,
    dadurch gekennzeichnet, daß die Zwischen-Speicherkippstufe (SP6) mit ihrem Rücksetz- und Setzeingang mit
    Erdpotential verbunden ist.

9.  Laufbildgerät nach einem der vorhergehenden Ansprüche,
    dadurch gekennzeichnet, daß die durch Speicherkippstu-
    fen beeinflußbaren Folge-Speicherkippstufen Steuerlei-
    tungen vom Ausgang der Folge-Speicherkippstufen zum
    Rücksetzeingang bzw. Löscheingang der vorgeschalteten
    Speicherkippstufen aufweisen.

10. Laufbildgerät nach einem der vorhergehenden Ansprüche,
dadurch gekennzeichnet, daß zwischen Stopeingang (S)
und Zwischenspeicher (SP6), zwischen Vorlaufeingang (V)
und Vorlauf-Speicherkippstufe (SP3) und zwischen Bildmarkierungs-Speicherkippstufe (SP4) und Bildmarkierungssignaleingang (L) je ein Vorspeicher (Gl, G2, G30;
SP5; G26, G27) vorgesehen ist.

11. Laufbildgerät nach Anspruch 10, dadurch gekennzeichnet,
daß der Ausgang (Q) der Zwischenspeicherkippstufe (SP6)
bzw. der Vorlauf-Speicherkippstufe (SP3) bzw. der Bildmarkierungs-Speicherkippstufe (SP4) je eine Löschsteuerleitung zu dem jeweils vorgeschalteten Vorspeicher
aufweist.

12. Laufbildgerät nach einem der vorhergehenden Ansprüche,
dadurch gekennzeichnet, daß ein Rücklaufschalter (R)
vorgesehen ist, dem ein Rücklaufspeicher (G20, G21)
nachgeschaltet ist, durch den sämtliche Speicherkippstufen (SP1 bis SP6) zwangsweise zurücksetzbar sind und
daß die Greifervorrichtung (15, 16) im Rücklaufbetrieb
durch den Elektromagneten (19) entkuppelt ist.

13. Laufbildgerät nach einem der Ansprüche 4 bis 12, dadurch gekennzeichnet, daß dem bei Betätigung der Stoptaste (S) löschbaren Rücklaufspeicher (G20, G21) ein
Rücklaufstopspeicher (G44, G45) nachgeschaltet ist, daß
nach dem Löschen des Rücklaufspeichers (G20, G21) sämtliche zwangsweisen Rücksetzungen der Speicherkippstufen (SP1 bis SP6) aufgehoben sind, daß der Rücklaufstopspeicher (G44, G45) in Verbindung mit dem Steuerimpuls bei Betätigung der Stoptaste (S) eine Verzögerungs- oder Zählkette (SP7 bis SP10) einschaltet, daß
nach Verstreichen der Verzögerungszeitspanne, die an die Stillsetzzeit des Rücklaufmotors angepaßt ist,
durch einen Ausgangsimpuls der Zählkette (SP7 bis
SP10), die bei allen anderen Betriebs- bzw. Funktionsarten der Schaltungsanordnung zwangsweise zurückgesetzt
ist, über eine entsprechende Steuerleitung der Steuereingang (D) der Zwischen-Speicherkippstufe (SP6) einen
Steuerimpuls erhält, wodurch eine Steuerfolge für Einzelbild gestartet wird.

14. Laufbildgerät nach einem der vorhergehenden Ansprüche,
    dadurch gekennzeichnet, daß eine Zeitverzögerungsschaltung (31 bis 33 und T26 bis T33) vorgesehen ist, welche
    eine Steuerleitung entweder zum Takteingang (T) des
    Vorspeichers SP5) oder zum Steuereingang der Vorlauf-Speicherkippstufe (SP3) aufweist und daß vom Aus-
    gang der Ausgangs-Speicherkippstufe (SP2) eine Start-
    steuerverbindung zur Zeitverzögerungsschaltung vorge-
    sehen ist, wodurch z. B. nach der bildpositionsgerechten Entkupplung des Greifersystems infolge eines Lichtmarkenimpulses oder infolge der Betätigung des Stop-
    schalters (S) nach Verstreichen der Verzögerungszeitspanne die Schaltungsanordnung (30) erneut auf Vorlaufbetrieb eingeschaltet wird.

15. Laufbildgerät nach Anspruch 14, dadurch gekennzeichnet,
    daß in der Startsteuerverbindung eine Verknüpfungsschaltung (G4, G28, G51) vorgesehen ist, die die Startsteuerverbindung erst nach Freigabe des Stopschal-
    ters (S) durchschaltet.

Hierzu 12 Blatt Zeichnungen

Fig. 1

1/12

0047495

Fig. 2a

Fig. 2b

Fig. 2c

Fig. 2d

Fig. 2e

Fig. 2f

Fig.2g

## STOP AUS VORLAUF

Fig. 3

## EINZELBILD

Fig. 4

*Fig. 5*